# EUROPÄISCHE PATENTSCHRIFT

(11) **EP 0 569 784 B1**
(45) Veröffentlichungstag und Bekanntmachung des Hinweises auf die Patenterteilung: **16.07.1997**
(21) Anmeldenummer: 93106938.9
(22) Anmeldetag: 29.04.1993
(51) Int. Cl.: C09B 67/22, B41M 5/26

(54) **Cyan-Mischungen für den Farbstofftransfer**
Cyan mixtures for dyestuff transfer
Mélanges de cyan pour le transfert de colorants

(30) Priorität: 12.05.1992 DE 4215536
(43) Veröffentlichungstag der Anmeldung: 18.11.1993
(73) Patentinhaber: BASF Aktiengesellschaft, 67063 Ludwigshafen (DE)
(72) Erfinder: Etzbach, Karl-Heinz, Dr., D-67227 Frankenthal (DE); Werner, Thomas, Dr., W-6800 Mannheim 1 (DE); Sens, Ruediger, Dr., W-6800 Mannheim 1 (DE)

(56) Entgegenhaltungen:
- EP-A- 0 337 200
- EP-A- 0 351 968
- EP-A- 0 479 068
- EP-A- 0 480 252
- EP-A- 0 480 278
- US-A- 5 079 365

## Beschreibung

Die vorliegende Erfindung betrifft neue Farbstoffmischungen, enthaltend mindestens einen Anthrachinonfarbstoff, dessen Absorptionsmaximum bei einer Wellenlänge von 600 bis 750 nm liegt, sowie mindestens einen Farbstoff der Formel I, II, III, IV und/oder V 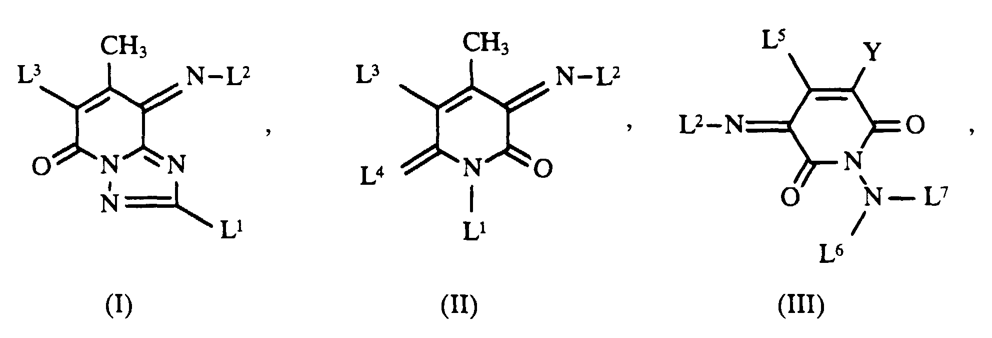 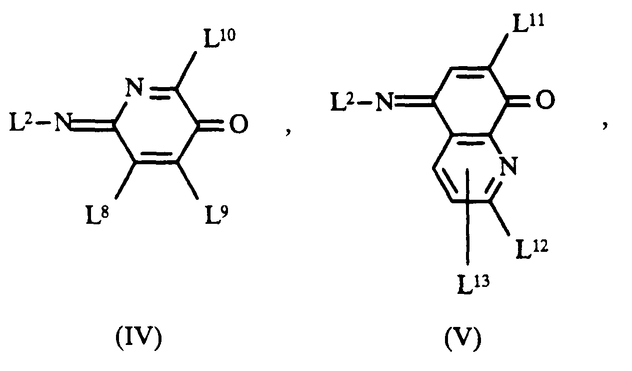 worin
- L¹: C₁-C₂₀-Alkyl, das gegebenenfalls substituiert ist und durch 1 bis 4 Sauerstoffatome in Etherfunktion unterbrochen sein kann, gegebenenfalls substituiertes Phenyl oder Hydroxy,
- L²: einen 5- oder 6-gliedrigen carbocyclischen oder heterocyclischen Rest,
- L³: Cyano, Carbamoyl, Carboxyl oder C₁-C₄-Alkoxycarbonyl,
- L⁴: Sauerstoff oder einen Rest der Formel
C(CN)₂, 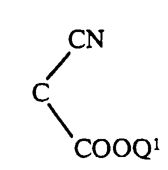 oder C(COOQ¹)₂,
worin Q¹ jeweils für C₁-C₈-Alkyl, das gegebenenfalls durch 1 oder 2 Sauerstoffatome in Etherfunktion unterbrochen ist, steht,
- L⁵: Wasserstoff oder C₁-C₄-Alkyl,
- L⁶ und L⁷: gleich oder verschieden sind und unabhängig voneinander jeweils Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L⁶ und L⁷ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält,
- Y: Cyano oder einen Rest der Formel CO-Q², CO-OQ² oder CO-NHQ², worin Q² für Wasserstoff, C₁-C₈-Alkyl, das gegebenenfalls substituiert ist und durch 1 oder 2 Sauerstoffatome in Etherfunktion unterbrochen sein kann, C₅-C₇-Cycloalkyl, Phenyl oder Tolyl steht,
- L⁸: Wasserstoff, Fluor, Chlor, Methyl oder einen Rest der Formel -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ oder -NH-SO₂-NA¹A², worin
A¹ und A² gleich oder verschieden sind und unabhängig voneinander jeweils für C₁-C₈-Alkyl, das gegebenenfalls substituiert ist und durch 1 oder 2 Sauerstoffatome in Etherfunktion unterbrochen sein kann, C₅-C₇-Cycloalkyl, Phenyl oder Tolyl oder -NA¹A² auch für Amino und
A³ für einen fünf- oder sechsgliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen,
- L⁹: Wasserstoff, Fluor oder Chlor oder L⁸ und L⁹ zusammen mit den Kohlenstoffatomen an die sie geknüpft sind, einen fünf- oder sechsgliedrigen aromatischen carbocyclischen oder heterocyclischen Ring,
- L¹⁰: den obengenannten Rest A³ oder einen Rest der Formel -CO-OA¹, -CO-NH-A¹, -CO-NH-CO-A¹, -CO-NH-CO-A³, -CO-NH-SO₂-A³, -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ oder -NH-SO₂-NA¹A², worin A¹, A² und A³ jeweils die obengenannte Bedeutung besitzen,
- L¹¹: Fluor, Chlor oder Brom,
- L¹²: Wasserstoff oder C₁-C₄-Alkyl und
- L¹³: Wasserstoff, Fluor, Chlor oder Brom bedeuten,
sowie ein Verfahren zu ihrer thermischen Übertragung.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Es ist bekannt, das Thermotransferdruckverfahren mit einzelnen Farbstoffen oder auch mit Mischungen von Farbstoffen durchzuführen. Dabei hat sich jedoch gezeigt, daß die zur Anwendung kommenden Farbstoffe noch anwendungstechnische Mängel aufweisen.

Aufgabe der vorliegenden Erfindung war es daher, neue Farbstoffmischungen im Cyanbereich bereitzustellen, die sich in vorteilhafter Weise zur thermischen Übertragung eignen. Demgemäß wurden die eingängs näher bezeichneten Farbstoffmischungen gefunden.

Ein Mischungspartner der neuen Farbstoffmischungen sind Anthrachinonfarbstoffe, deren Absorptionsmaximum bei einer Wellenlänge von 600 bis 750 nm, insbesondere 640 bis 680 nm, liegt.

Hervorzuheben sind dabei Anthrachinonfarbstoffe der Formel VI, VII oder VIII 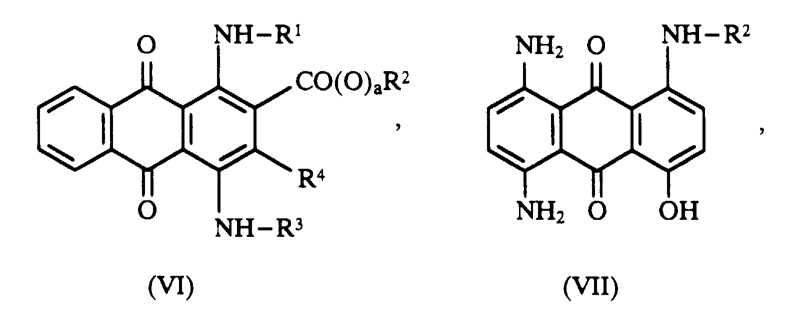 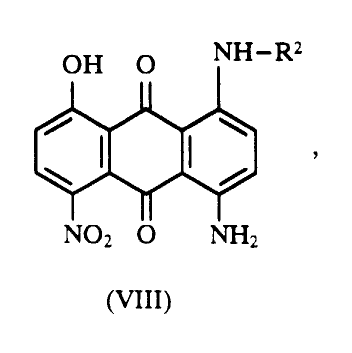 worin
- a: 0 oder 1,
- R¹, R² und R³: gleich oder verschieden sind und unabhängig voneinander jeweils Wasserstoff, Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen und durch Phenyl, C₁-C₄-Alkylphenyl, C₁-C₄-Alkoxyphenyl, Halogenphenyl, Benzyloxy, C₁-C₄-Alkylbenzyloxy, C₁-C₄-Alkoxybenzyloxy, Halogenbenzyloxy, Halogen, Hydroxy oder Cyano substituiert sein können, gegebenenfalls durch C₁-C₁₅-Alkyl, C₁-C₁₅-Alkoxy, Halogen oder Benzyloxy substituiertes Phenyl, gegebenenfalls durch C₁-C₁₅-Alkyl, C₁-C₁₅-Alkoxy, Halogen oder Benzyloxy substituiertes Cyclohexyl oder einen Rest der Formel

[-E-O]ₘ-R⁵,

worin
E für C₂-C₆-Alkylen
m für 1, 2, 3, 4, 5 oder 6 und
R⁵ für C₁-C₄-Alkyl oder gegebenenfalls durch C₁-C₄-Alkyl oder C₁-C₄-Alkoxy substituiertes Phenyl stehen, und
- R⁴: Wasserstoff oder Cyano bedeuten,
mit der Maßgabe, daß R² nur dann Wasserstoff bedeutet, wenn a 0 ist.

Reste L² können sich z.B. von Komponenten aus der Benzol-, Indol-, Chinolin-, Aminonaphthalin-, Aminothiazol- oder Aminothiophenreihe ableiten.

Hervorzuheben sind Farbstoffmischungen, die mindestens einen Farbstoff der Formel I, II, III, IV und/oder V enthalten, worin L² für einen Rest der Formel 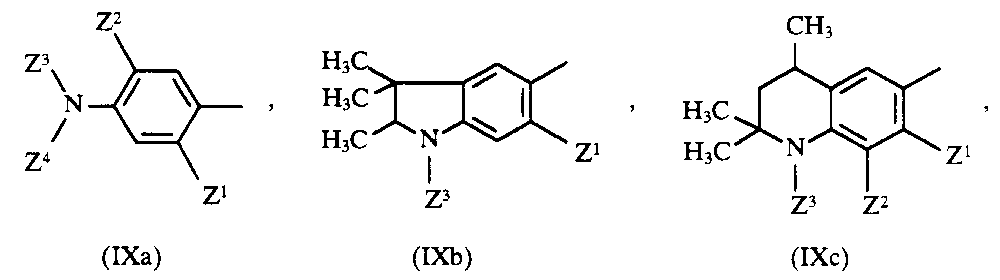 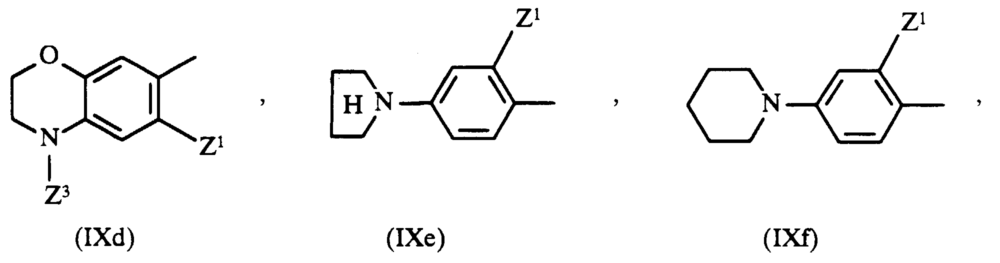 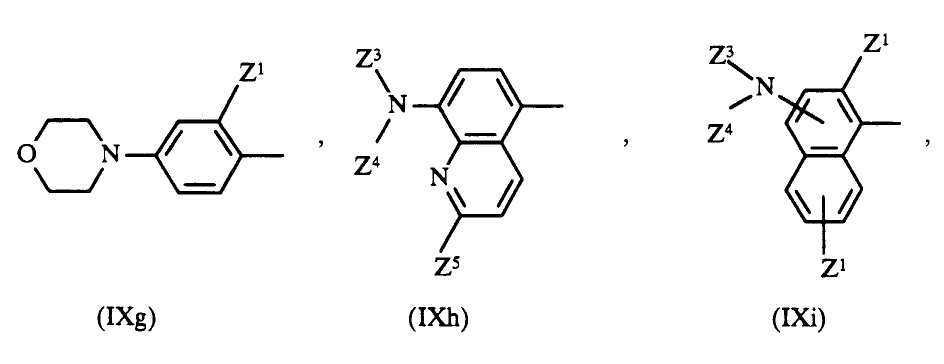 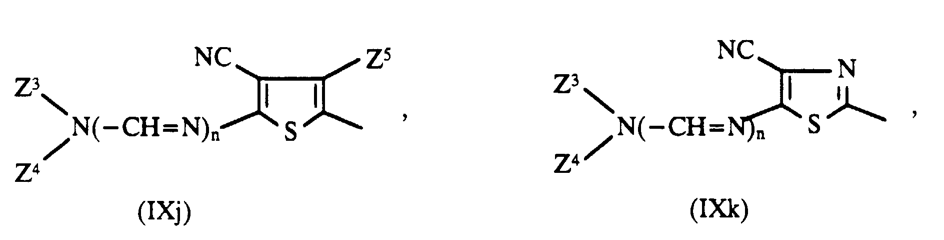 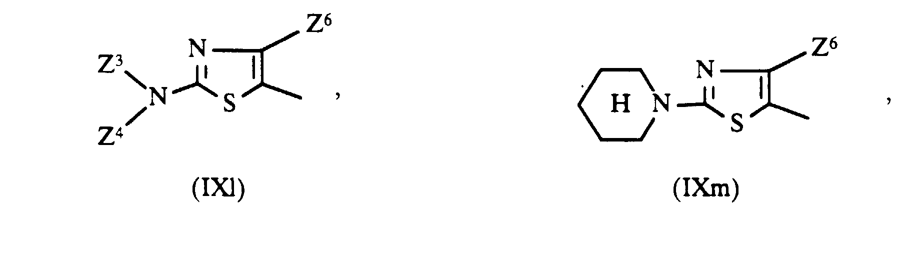 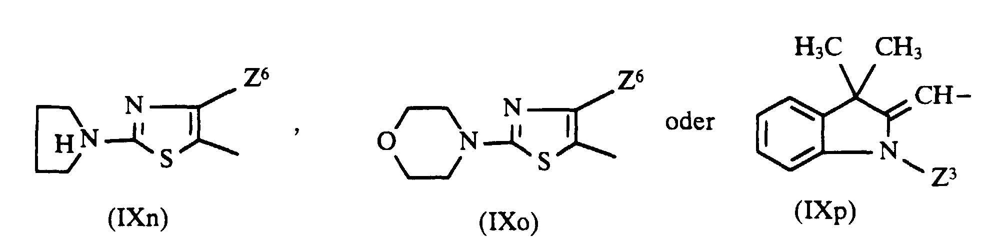 steht, worin
- n: 0 oder 1,
- Z¹: für Wasserstoff, C₁-C₈-Alkyl, das gegebenenfalls durch 1 oder 2 Sauerstoffatome in Etherfunktion unterbrochen ist, Methoxy, Ethoxy, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₈-Alkyl, das gegebenenfalls durch ein oder zwei Sauerstoffatome in Etherfunktion unterbrochen ist, besitzt,
- Z²: für Wasserstoff, Methyl, Methoxy oder Ethoxy,
- Z³ und Z⁴: gleich oder verschieden sind und unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,
- Z⁵: Halogen oder gegebenenfalls substituiertes Phenyl und
- Z⁶: für Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino stehen und
- L⁵: die obengenannte Bedeutung besitzt.

Alle in den obengenannten Formeln auftretenden Alkyl-, Alkylen- und Alkenylgruppen können sowohl geradkettig als auch verzweigt sind.

Wenn in den obengenannten Formeln substituierte Alkylgruppen auftreten, so können als Substituenten, sofern nicht anders vermerkt, z.B. Cyano, Phenyl, Tolyl, C₁-C₆-Alkanoyloxy, C₁-C₄-Alkoxycarbonyl, C₁-C₄-Alkylaminocarbonyloxy oder C₁-C₄-Alkoxycarbonyloxy, wobei im letzten Fall die Alkoxygruppe durch Phenyl oder C₁-C₄-Alkoxy substituiert sein kann, in Betracht kommen.

Wenn in den obengenannten Formeln substituierte Phenyl- oder Pyridylgruppen auftreten, so können als Substituenten z.B. Halogen, C₁-C₄-Alkyl- oder C₁-C₄-Alkoxy in Betracht kommen.

Reste E sind z.B. Ethylen, 1,2- oder 1,3-Propylen, 1,2-, 1,3-, 1,4- oder 2,3-Butylen, Pentamethylen, Hexamethylen oder 2-Methylpentamethylen.

Geeignete Reste R¹, R², R³, R⁵, Z¹, L¹, L⁵, L⁶, L⁷, L¹², A¹, A², Q¹, Q², Z¹, Z³, Z⁴, Z⁶ und Z⁷ sind z.B. Methyl, Ethyl, Propyl, Isopropyl, Butyl, Isobutyl, sec-Butyl oder tert-Butyl.

Reste R¹, R², R³, L¹, L⁶, L⁷, A¹, A², Q¹, Q², Z¹, Z³, Z⁴, Z⁶ und Z⁷ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste R¹, R², R³, L¹, L⁶ und L⁷ sind weiterhin z.B. Nonyl, Isononyl, Decyl, Isodecyl, Undecyl oder Dodecyl.

Reste R¹, R², R³ und L¹ sind weiterhin z.B. Tridecyl, Isotridecyl, Tetradecyl, Pentadecyl, Hexadecyl, Heptadecyl, Octadecyl, Nonadecyl oder Eicosyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Enzyklopädie der technischen Chemie, 4. Auflage, Band 7, Seiten 215 bis 217 sowie Band 11, Seiten 435 und 436).).

Reste R¹, R², R³, A¹, A², Q², L¹, Z¹ und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl oder 2- oder 4-Butoxybutyl.

Reste L¹, R¹, R², R³, A¹, A², Q² und Z¹ sind weiterhin z.B. 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, oder 4,8-Dioxadecyl.

Reste R¹, R², R³ und L¹ sind weiterhin z.B. 3,6,9-Trioxadecyl, 3,6,9-Trioxaundecyl, 3,6,9,12-Tetraoxatridecyl, 3,6,9,12-Tetraoxatetradecyl, 2-Methoxycarbonylethyl, Benzyl, 1- oder 2-Phenylethyl, 3-Benzyloxypropyl oder 2-, 3-oder 4-Chlorphenyl.

Reste L³ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R¹, R², R³, L¹ und Z⁶ sind weiterhin z.B. 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste L⁶ und L⁷ sind weiterhin z.B. Phenyl, 2-, 3- oder 4-Methylphenyl, 2-, 3- oder 4-Methoxyphenyl, Pyridyl, 2-, 3-oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methoxycarbonyl, Ethoxycarbonyl, Propoxycarbonyl, Isopropoxycarbonyl, Butoxycarbonyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl oder Thien-3-ylcarbonyl.

Reste R¹, R², R³, Q², L⁶, L⁷, Z³ und Z⁴ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste Q², L⁶, L⁷, Z³ und Z⁴ sind weiterhin z.B. Benzyl, 2-Methylbenzyl, 1-oder 2-Phenylethyl, Cyclopentyl, Cyclohexyl, Cycloheptyl oder 2-, 3- oder 4-Methylphenyl.

Reste Z¹ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste Z⁶ sind weiterhin, wie auch Reste Z⁵, z.B. Fluor, Chlor oder Brom.

Reste Z⁶ sind weiterhin z.B. Phenyl, 2-Methylphenyl, 2,4-Dimethylphenyl, 2-Methoxyphenyl, 2,4-Dimethoxyphenyl, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Reste Z³ und Z⁴ sind weiterhin z.B. Allyl oder Methallyl.

Wenn L⁶ und L⁷ oder Z³ und Z⁴ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Reste L⁶, L⁷, A¹ und A² sind weiterhin z.B. Cyclopentyl, Cyclohexyl oder Cycloheptyl.

Reste A³ leiten sich von einem fünf- oder sechsgliedrigen aromatischen heterocyclischen Rest ab, der gegebenenfalls benzoanelliert ist und der ein oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste A³ ableiten, sind z.B. Pyrrol, Furan, Thiophen, Pyrazol, Imidazol, Oxazol, Isoxazol, Thiazol, Isothiazol, 1,2,4-Triazol, 1,2,4-Oxdiazol, 1,3,4-Oxdiazol, 1,2,4-Thiadiazol, 1,3,4-Thiadiazol, Pyridin, Pyridazin, Pyrimidin oder Pyrazin.

Hervorzuheben sind dabei Heterocyclen aus der Pyrrol-, Thiophen-, Isoxazol-, Pyridin- oder Pyridazinreihe.

Als Reste A³-CO oder A³-SO₂ kommen insbesondere solche fünf- oder sechsgliedrige aromatische heterocyclische Reste in Betracht, die sich von den folgenden heterocyclischen Carbonsäuren A³-COOH oder Sulfonsäuren A³-SO₃H ableiten: 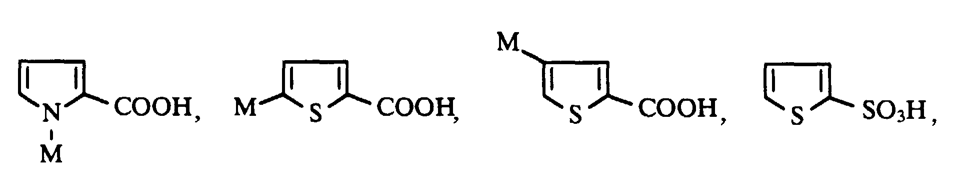 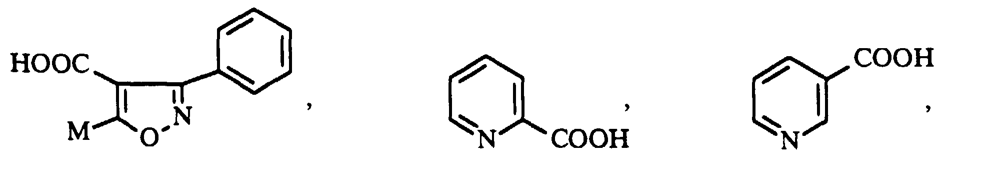 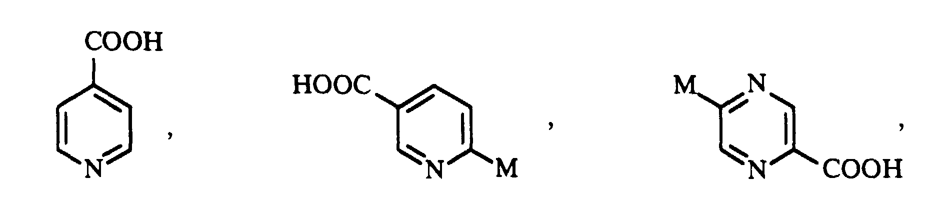 wobei
- M: jeweils für C₁-C₄-Alkyl steht.

Bevorzugte Mischungspartner sind Farbstoffe der Formel I oder II, worin L³ Cyano bedeutet.

Bevorzugte Mischungspartner sind weiterhin Farbstoffe der Formel I oder II, worin L² sich von einer Komponente aus der Benzol-, Indol-, Chinolin-, Aminonaphthalin-, Aminothiazol oder Aminothiophenreihe ableitet.

Bevorzugte Mischungspartner sind weiterhin Farbstoffe der Formel I oder II, worin L¹ C₁-C₁₂-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Besonders bevorzugte Mischungspartner sind Farbstoffe der Formel I oder II, worin L¹ Alkyl, Alkoxyalkyl, Alkanoyloxyalkyl oder Alkoxycarbonyloxyalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Besonders bevorzugte Mischungspartner sind weiterhin Farbstoffe der Formel I oder II, worin L² einen Rest der obengenannten Formel IXa, IXc, IXl, IXm, IXn oder IXo bedeutet.

Bevorzugt als Mischungspartner sind Farbstoffe der Formel III, in der L² einen Rest der Formel IXa, IXc, IXl, IXm, IXn, IXo oder IXp bedeutet, wobei ein Rest der Formel IXc oder IXl besonders zu nennen ist.

Besonders als Mischungspartner hervorzuheben sind Farbstoffe der Formel IIIa 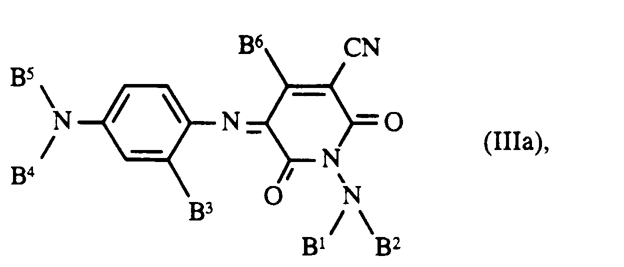 in der
- B¹ und B²: unabhängig voneinander jeweils Wasserstoff, C₁-C₈-Alkyl, Phenyl, Tolyl, C₁-C₈-Alkylcarbonyl, C₁-C₈-Alkylsulfonyl, Phenylsulfonyl, Tolylsulfonyl, Pyridylsulfonyl, Benzoyl, Methylbenzoyl, Pyridylcarbonyl oder Thienylcarbonyl,
- B³: Wasserstoff, Methyl, Methoxy oder den Rest -NHCOZ⁷ oder -NHCO₂Z⁷, worin Z⁷ für Phenyl, Benzyl, Tolyl oder C₁-C₈-Alkyl, das gegebenenfalls durch ein oder zwei Sauerstoffatome in Etherfunktion unterbrochen ist, steht,
- B⁴ und B⁵: unabhängig voneinander Wasserstoff, C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl oder C₁-C₄-Alkoxycarbonyloxy-C₂-C₄-alkyl und
- B⁶: Wasserstoff oder Methyl bedeuten.

Besonders als Mischungspartner hervorzuheben sind weiterhin Farbstoffe der Formel IIIb 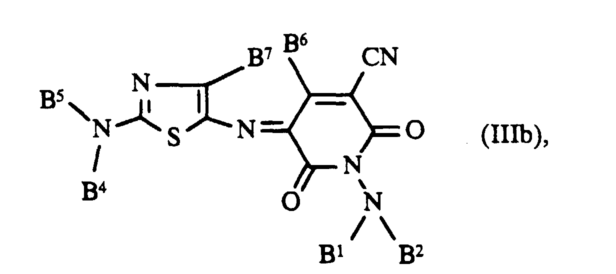 in der B⁷ C₁-C₆-Alkyl, Phenyl, Tolyl, Anisidiyl, Benzyl, Cyclohexyl oder Thienyl bedeutet und B¹, B², B⁴, B⁵ und B⁶ jeweils die unter der Formel IIIa genannte Bedeutung besitzen.

Ganz besonders hervorzuheben sind Farbstoffe der Formel IIIa, in der B¹ und B² unabhängig voneinander jeweils C₁-C₈-Alkylcarbonyl, Benzoyl, Methylbenzoyl oder Thienylcarbonyl bedeuten.

Weiterhin bevorzugt als Mischungspartner sind Farbstoffe der Formel IV, in der
- L⁸: Wasserstoff, Chlor oder Methyl und
- L⁹: Wasserstoff oder Chlor bedeuten.

Weiterhin besonders bevorzugt als Mischungspartner sind Pyridonfarbstoffe der Formel IV, in der L² einen Rest der Formel IXa, IXc, IXe, IXf, IXg, IXj, IXl, IXm, IXn oder IXo, bedeutet, wobei ein Rest der Formel IXa oder IXc besonders hervorzuheben ist.

Insbesondere als Mischungspartner zu nennen sind Pyridonfarbstoffe der Formel IVa 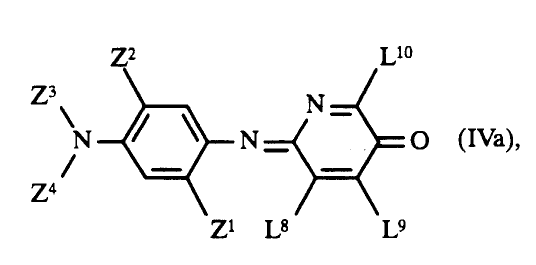 in der
- L⁸: Wasserstoff, Chlor oder Methyl,
- L⁹: Wasserstoff oder Chlor,
- L¹⁰: einen Rest der Formel -CO-NH-A¹, -NH-CO-A¹, -NH-CO-OA¹ oder -NH-CO-NA¹A², worin A¹ und A² unabhängig voneinander für C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl, C₁-C₄-Alkoxycarbonyloxy-C₂-C₄-alkyl, C₅-C₇-Cycloalkyl, Phenyl oder Tolyl oder -NA¹A² auch für Amino stehen,
- Z¹: Wasserstoff, Methyl, Methoxy oder den Rest -NHCOZ⁷ oder -NHCO₂Z⁷, worin Z⁷ für Phenyl, Benzyl, Tolyl oder C₁-C₈-Alkyl, das gegebenenfalls durch 1 Sauerstoffatom in Etherfunktion unterbrochen ist, steht,
- Z²: Wasserstoff und
- Z³ und Z⁴: unabhängig voneinander Wasserstoff, C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl oder C₁-C₄-Alkoxycarbonyloxy-C₂-C₄-alkyl bedeuten.

Insbesondere als Mischungspartner zu nennen sind weiterhin Pyridonfarbstoffe der Formel IVb 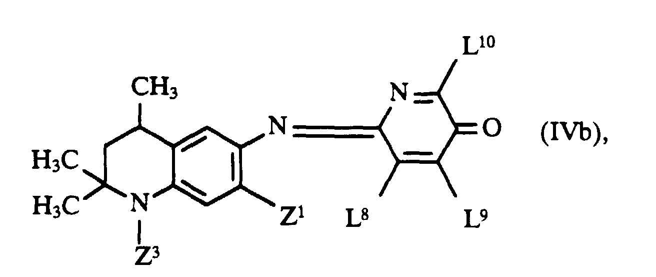 in der
- L⁸: Wasserstoff, Chlor oder Methyl,
- L⁹: Wasserstoff oder Chlor,
- L¹⁰: einen Rest der Formel -CO-NH-A¹, -NH-CO-A¹, -NH-CO-OA¹ oder -NH-CO-NA¹A², worin A¹ und A² unabhängig voneinander für C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl, C₁-C₄-Alkoxycarbonyloxy-C₂-C₄-alkyl, C₅-C₇-Cycloalkyl, Phenyl oder Tolyl oder -NA¹-A² auch für Amino stehen,
- Z¹: Wasserstoff, Methyl, Methoxy oder den Rest -NHCOZ⁷ oder -NHCO₂Z⁷, worin Z⁷ für Phenyl, Benzyl, Tolyl oder C₁-C₈-Alkyl, das gegebenenfalls durch 1 Sauerstoffatom in Etherfunktion unterbrochen ist, steht und
- Z³: Wasserstoff, C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl oder C₁-C₄-Alkoxycarbonyloxy-C₂-C₄-alkyl bedeuten.

Ganz besonders als Mischungspartner hervorzuheben sind Pyridonfarbstoffe der Formel IVa oder IVb, in der L¹⁰ den Rest -NH-COA¹, worin A¹ für C₁-C₈-Alkyl, das gegebenenfalls durch 1 Sauerstoffatom in Etherfunktion unterbrochen ist, steht, und Z¹ den Rest -NH-COZ⁷ oder -NHCO₂Z⁷, worin Z⁷ für Phenyl, Benzyl, Tolyl oder C₁-C₈-Alkyl, das gegebenenfalls durch 1 Sauerstoffatom in Etherfunktion unterbrochen ist, steht, bedeuten.

Bevorzugt als Mischungspartner sind weiterhin Farbstoffe der Formel V, in der
- L¹¹: Chlor,
- L¹²: Wasserstoff oder Methyl
- L¹³: Wasserstoff und
- L²: einen Rest der Formel IXa, IXc, IXe, IXf oder IXg bedeuten, wobei solche Farbstoffe hervorzuheben sind, in denen Z¹ für Wasserstoff oder den Rest -NH-COZ⁷ oder -NHCO₂Z⁷ steht, worin Z⁷ jeweils die obengenannte Bedeutung besitzt.

Besonders bevorzugt als Mischungspartner sind Farbstoffe der Formel V, in der
- L¹¹: Chlor,
- L¹²: Wasserstoff oder Methyl,
- L¹³: Wasserstoff und
- L²: einen Rest der Formel IXa oder IXc bedeuten, worin
- Z¹: für Wasserstoff, Methyl oder Acetylamino,
- Z²: für Wasserstoff oder Methoxy und
- Z³ und Z⁴: unabhängig voneinander für Wasserstoff, Benzyl oder gegebenenfalls substituiertes C₁-C₈-Alkyl stehen.

Bevorzugte Mischungspartner sind auch Anthrachinonfarbstoffe der Formel VI, VII und/oder VIII, wobei
- R¹, R² und R³: unabhängig voneinander Alkyl oder Alkoxyalkyl bedeuten, wobei diese Reste jeweils bis zu 15 Kohlenstoffatome aufweisen und durch Phenyl, C₁-C₄-Alkylphenyl oder C₁-C₄-Alkoxyphenyl substituiert und durch 1 oder 2 Sauerstoffatome in Etherfunktion unterbrochen sein können.

Hervorzuheben als Mischungspartner sind auch Anthrachinonfarbstoffe der Formel VIa 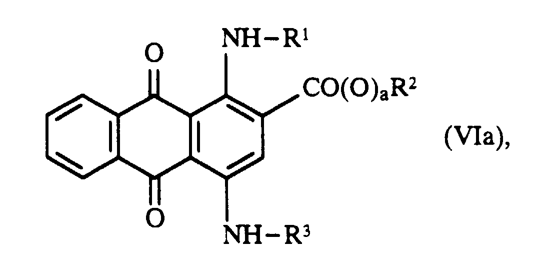 worin
- a: 0 oder 1,
- R¹: C₁-C₁₅-Alkyl,
- R²: C₁-C₁₅-Alkyl, einen Rest der Formel

[-E¹-O]ₚ-R⁷,

worin
E¹ für C₂-C₄-Alkylen,
p für 1, 2, 3 oder 4 und
R⁷ für C₁-C₄-Alkyl oder Phenyl stehen, oder, wenn a 0 ist, auch Wasserstoff und
- R³: C₁-C₁₅-Alkyl oder gegebenenfalls durch C₁-C₁₅-Alkyl oder C₁-C₁₅-Alkoxy substituiertes Phenyl bedeuten.

Besonders bevorzugte Mischungspartner sind auch Anthrachinonfarbstoffe der Formel VIb 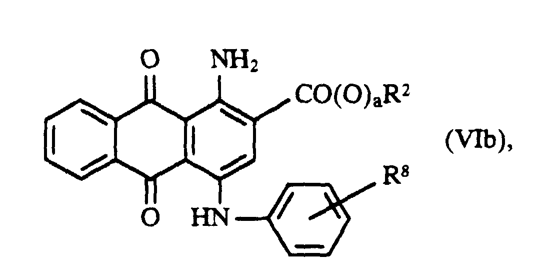 in der
- a: 0 oder 1,
- R²: C₁-C₁₅-Alkyl, einen Rest der Formel

[-E¹-O]ₚ-R⁷,

worin
E¹ für C₂- bis C₄-Alkylen,
p für 1, 2, 3 oder 4 und
R⁷ für C₁-C₄-Alkyl oder Phenyl stehen, oder wenn a 0 ist, auch Wasserstoff und
R⁸ C₁-C₁₅-Alkyl oder C₁-C₁₅-Alkoxy bedeuten.

Besonders bevorzugte Mischungspartner sind auch Anthrachinonfarbstoffe der Formel IVc 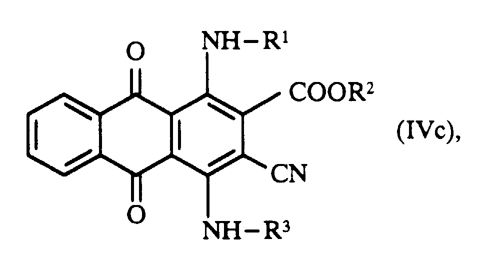 in der
- R²: C₁-C₁₅-Alkyl oder einen Rest der Formel

[-E¹-O]ₚ-R⁷,

worin
E, R⁵ und m jeweils die obengenannte Bedeutung besitzen und
- R¹ und R³: unabhängig voneinander Wasserstoff oder gegebenenfalls durch C₁-C₁₅-Alkyl oder C₁-C₁₅-Alkoxy substituiertes Benzyl oder Phenyl, C₄-C₁₅-Alkanoyloxyalkyl, C₄-C₁₅-Alkoxycarbonyloxyalkyl, C₄-C₁₅-Alkoxycarbonylalkyl oder den Rest R² bedeuten.

Hervorzuheben sind Farbstoffmischungen, enthaltend einen Anthrachinonfarbstoff der Formel VI sowie einen Farbstoff der Formel I.
Weiterhin hervorzuheben sind Farbstoffmischungen, enthaltend einen Anthrachinonfarbstoff der Formel VI sowie einen Farbstoff der Formel II.

Weiterhin hervorzuheben sind Farbstoffmischungen, enthaltend einen Anthrachinonfarbstoff der Formel VI sowie einen Farbstoff der Formel III.

Weiterhin hervorzuheben sind Farbstoffmischungen, enthaltend einen Anthrachinonfarbstoff der Formel VI sowie einen Farbstoff der Formel IV.

Weiterhin hervorzuheben sind Farbstoffmischungen, enthaltend einen Anthrachinonfarbstoff der Formel VI sowie einen Farbstoff der Formel V.

Weiterhin hervorzuheben sind Farbstoffmischungen, enthaltend einen Anthrachinonfarbstoff der Formel VII sowie einen Farbstoff der Formel I.

Weiterhin hervorzuheben sind Farbstoffmischungen, enthaltend einen Anthrachinonfarbstoff der Formel VII sowie eien Farbstoff der Formel II.

Weiterhin hervorzuheben sind Farbstoffmischungen, enthaltend einen Anthrachinonfarbstoff der Formel VII sowie einen Farbstoff der Formel III.

Weiterhin hervorzuheben sind Farbstoffmischungen, enthaltend einen Anthrachinonfarbstoff der Formel VII sowie einen Farbstoff der Formel IV.

Weiterhin hervorzuheben sind Farbstoffmischungen, enthaltend einen Anthrachinonfarbstoff der Formel VII sowie einen Farbstoff der Formel V.

Weiterhin hervorzuheben sind Farbstoffmischungen, enthaltend einen Anthrachinonfarbstoff der Formel VIII sowie einen Farbstoff der Formel I.

Weiterhin hervorzuheben sind Farbstoffmischungen, enthaltend einen Anthrachinonfarbstoff der Formel VIII sowie einen Farbstoff der Formel II.

Weiterhin hervorzuheben sind Farbstoffmischungen, enthaltend einen Anthrachinonfarbstoff der Formel VIII sowie einen Farbstoff der Formel III.

Weiterhin hervorzuheben sind Farbstoffmischungen, enthaltend einen Anthrachinonfarbstoff der Formel VIII sowie einen Farbstoff der Formel IV.

Weiterhin hervorzuheben sind Farbstoffmischungen, enthaltend einen Anthrachinonfarbstoff der Formel VIII sowie einen Farbstoff der Formel V.

Besonders zu nennen sind Farbstoffmischungen, enthaltend einen Anthrachinonfarbstoff der Formel VI oder VII, wobei solchen Farbstoffmischungen, die einen Anthrachinonfarbstoff der Formel VI enthalten, besondere Bedeutung zukommmt.

Weiterhin besonders zu nennen sind Farbstoffmischungen, enthaltend einen Farbstoff der Formel I.

Ganz besondere Bedeutung kommt solchen Farbstoffmischungen zu, die einen Anthrachinonfarbstoff der Formel VI sowie einen Farbstoff der Formel I enthalten.

Die erfindungsgemäßen Farbstoffmischungen enthalten in der Regel 10 bis 90 Gew.%, vorzugsweise 40 bis 80 Gew.% und insbesondere 70 bis 80 Gew.%, jeweils bezogen auf das Gewicht der Farbstoffmischung, einen oder mehrere Anthrachinonfarbstoffe sowie 10 bis 90 Gew.%, vorzugsweise 20 bis 60 Gew.% und insbesondere 20 bis 30 Gew.%, jeweils bezogen auf das Gewicht der Farbstoffmischung, einen oder mehrere Farbstoffe der Formel I, II, III, IV und/oder V.

Die neuen Farbstoffmischungen können nach an sich bekannten Methoden, z.B. durch Abmischen der Einzelfarbstoffe im obengenannten Gewichtsverhältnis erhalten werden.

Die Anthrachinonfarbstoffe sind an sich bekannt und z.B. in der EP-A-337 200, EP-A-351 968 sowie EP-A-480 278 beschrieben oder können nach den dort genannten Methoden erhalten werden.

Die Farbstoffe der Formel I, II, III, IV und V sind ebenfalls bekannt und z.B. in der US-A-5 079 365, der älteren Patentanmeldung PCT/EP/92/00505 sowie in der EP-A-480 252 und EP-A-479 068 beschrieben.

Die erfindungsgemäßen Cyan-Farbstoffmischungen zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Drucktinte, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben Gelb und Magenta im Sinne einer optimalen Trichromie (höchst mögliche Brillanz von Grund- oder Mischfarben und tiefes neutrales Schwarz).

Insbesondere hervorzuheben ist die spektral gleichmäßige Abnahme der Einzelkomponenten bei Bestrahlung, d.h. der Einzelfarbstoff mit der geringeren Lichtechtheit nimmt nicht bevorzugt ab.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich eine eingangs näher bezeichnete Farbstoffmischung befindet.

Zur Herstellung der für das erfindungsgemäße Verfahren benötigten Farbstoffträger werden die Farbstoffmischungen in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffmischung vorzugsweise in molekular-dispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffmischung auftritt.

Solche Bindemittel sind beispielsweise in der EP-A-441 282 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyrat, Polyvinylacetat, Cellulosepropionat oder gesättigte lineare Polyester.

Das Gewichtsverhältnis Bindemittel:Farbstoffmischung beträgt im allgemeinen 1:1 bis 10:1.

Als Hilfsmittel kommen z.B. Trennmittel in Betracht, wie sie in der EP-A-441 282 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der EP-A-441 282 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der EP-A-441 282 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffmischungen eignen sich weiterhin vorteilhaft zum Färben von synthetischen Materialien, z.B. von Polyestern, Polyamiden oder Polycarbonaten. Insbesondere zu nennen sind textile Gewebe aus Polyester oder Polyamid oder Polyester-Baumwolle-Mischgewebe.

Die neuen Farbstoffmischungen eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung weiter erläutern.

### Beispiele

In der folgenden Tabelle 1 sind die Einzelfarbstoffe aufgeführt, die als Mischungspartner dienten.

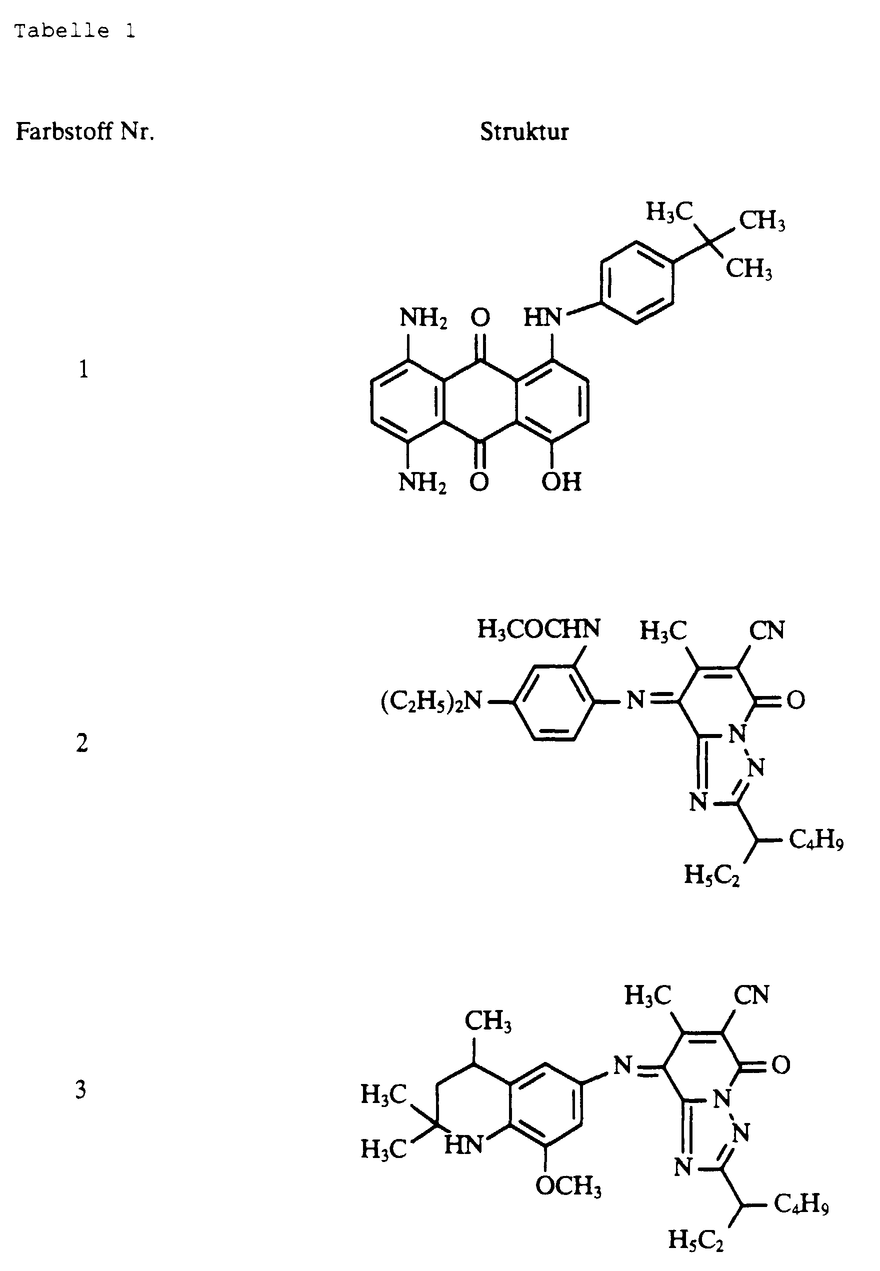

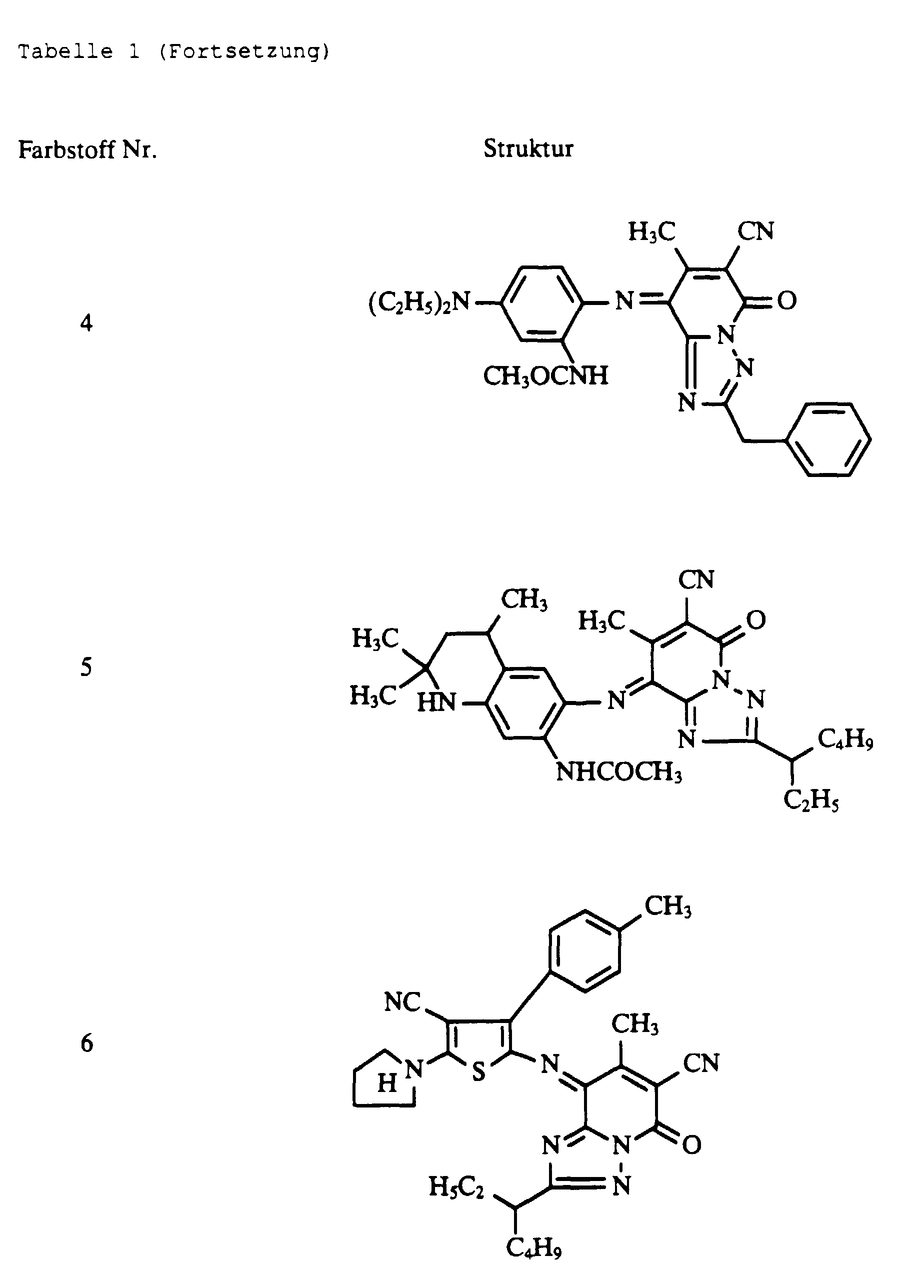

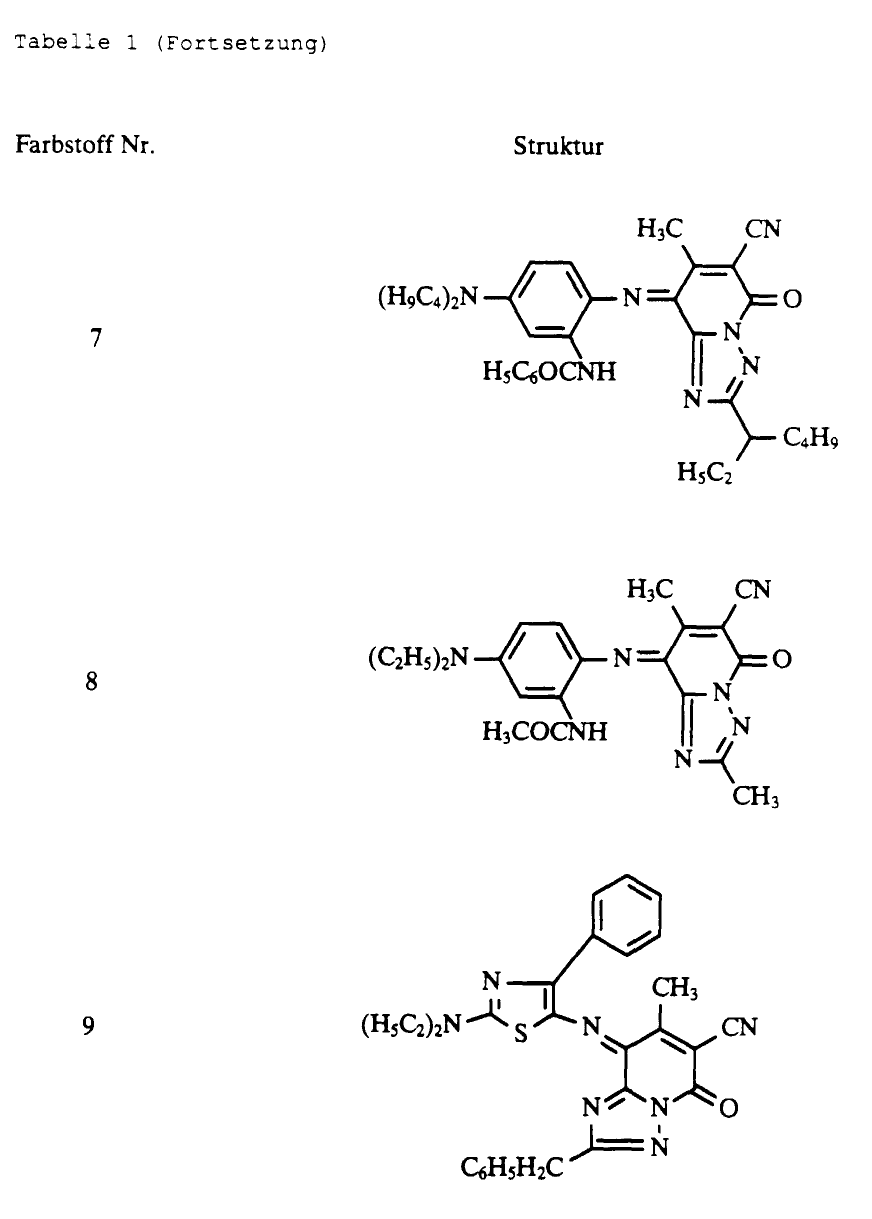

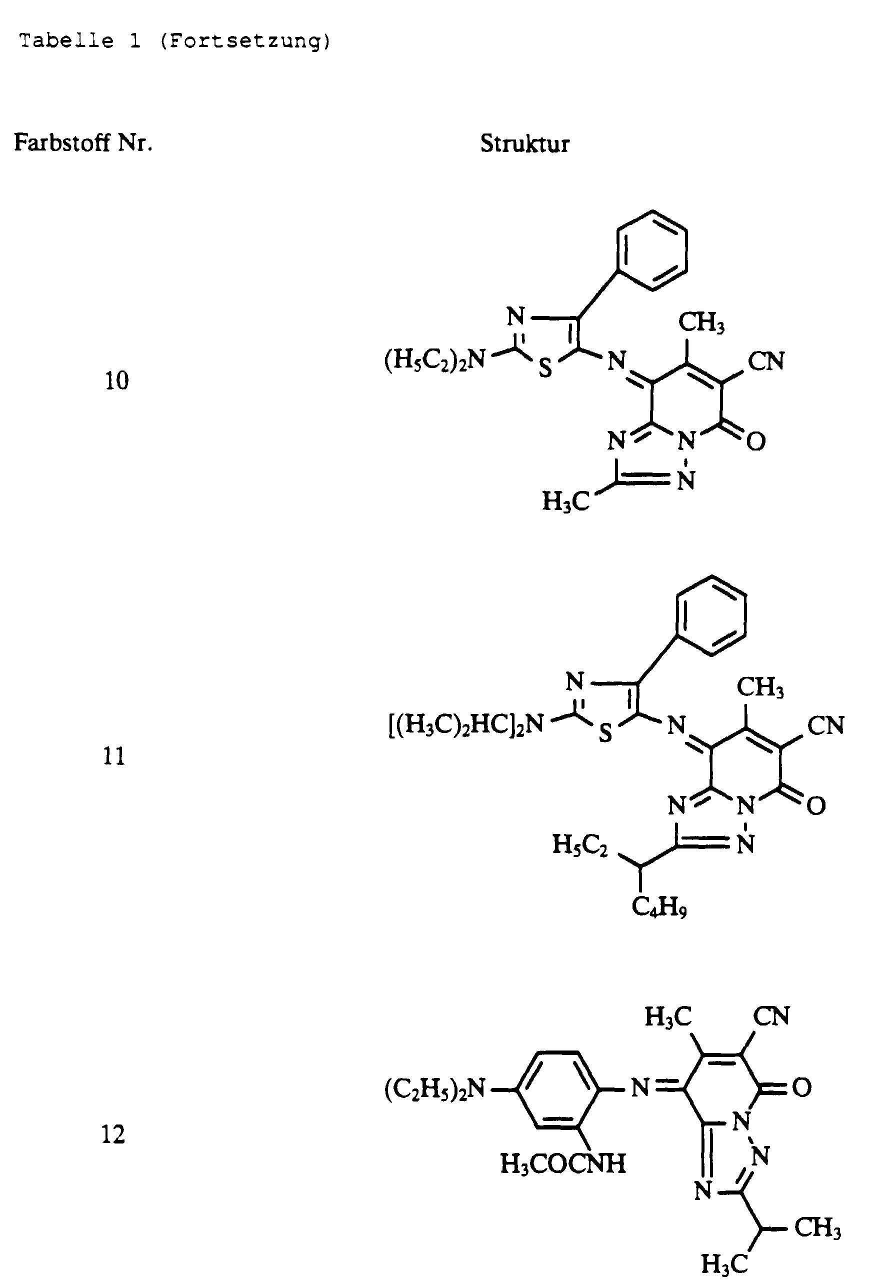

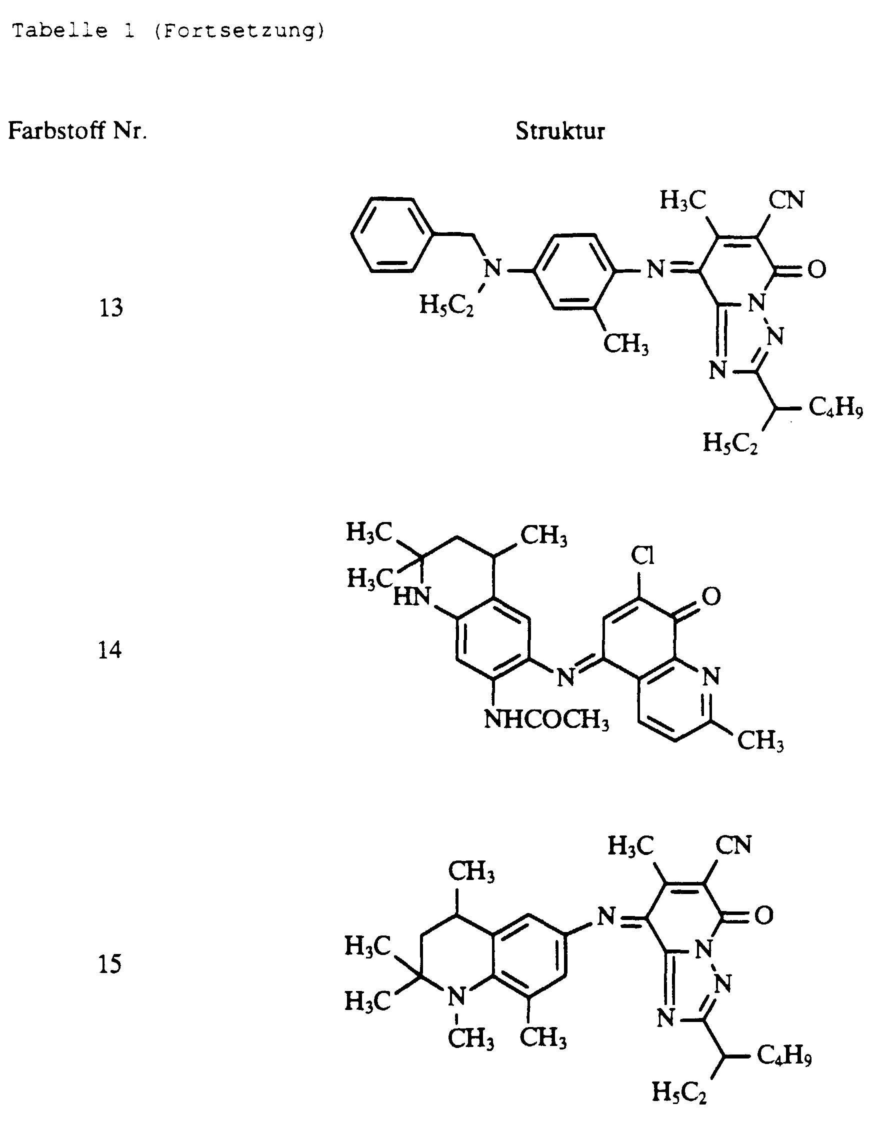

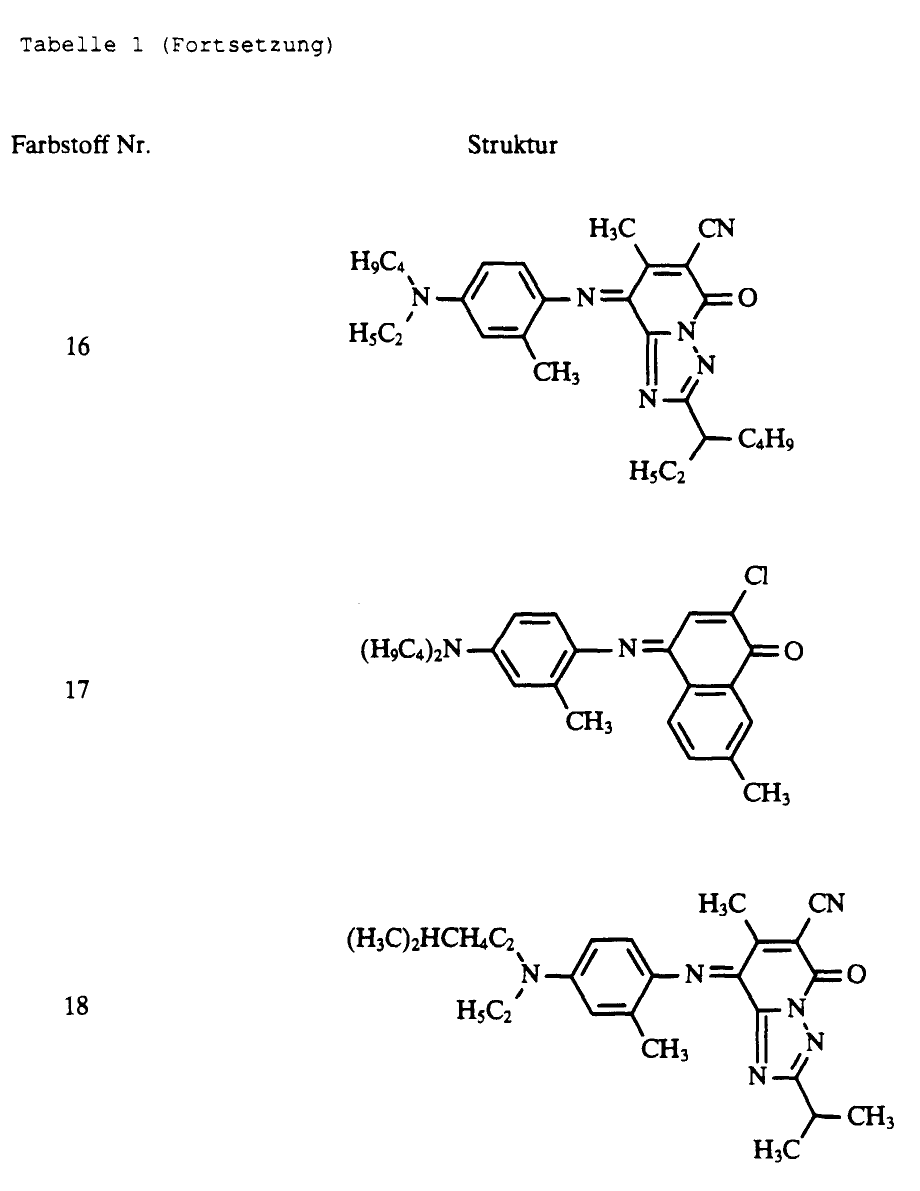

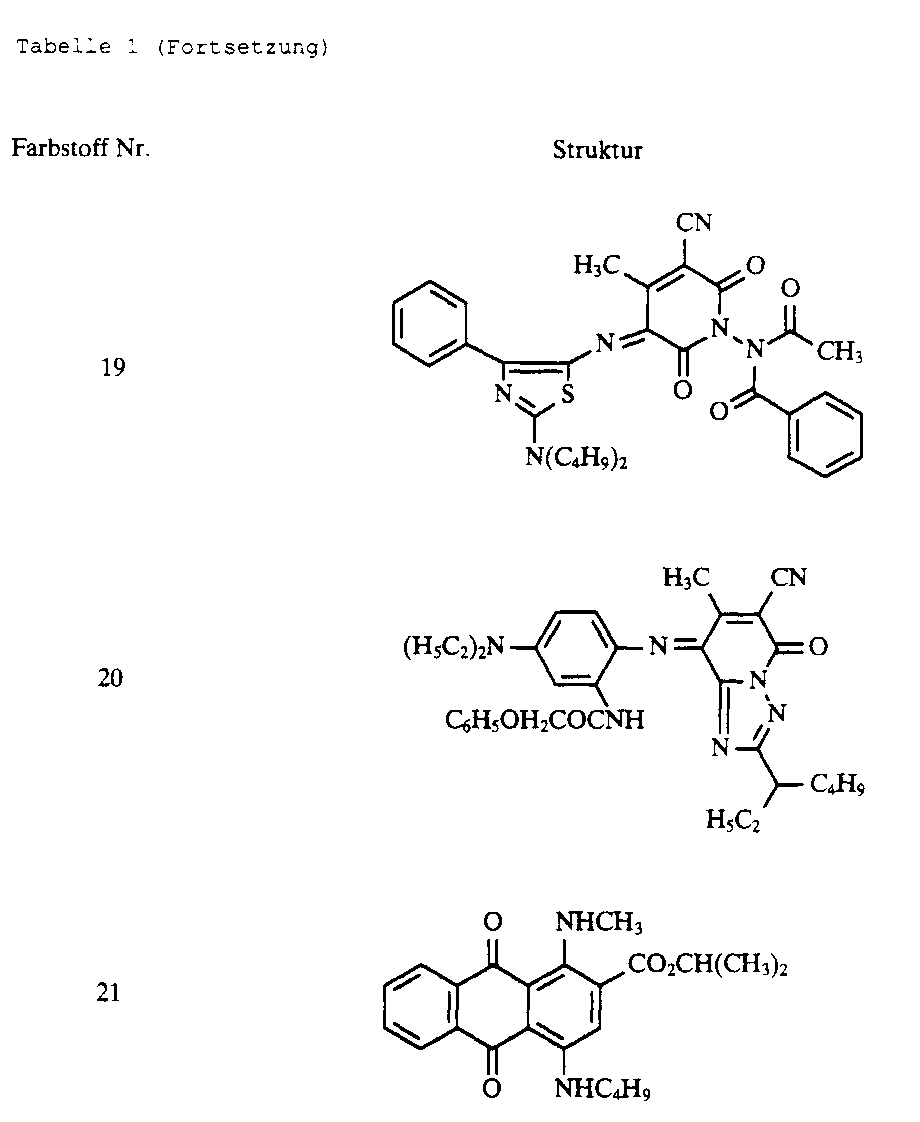

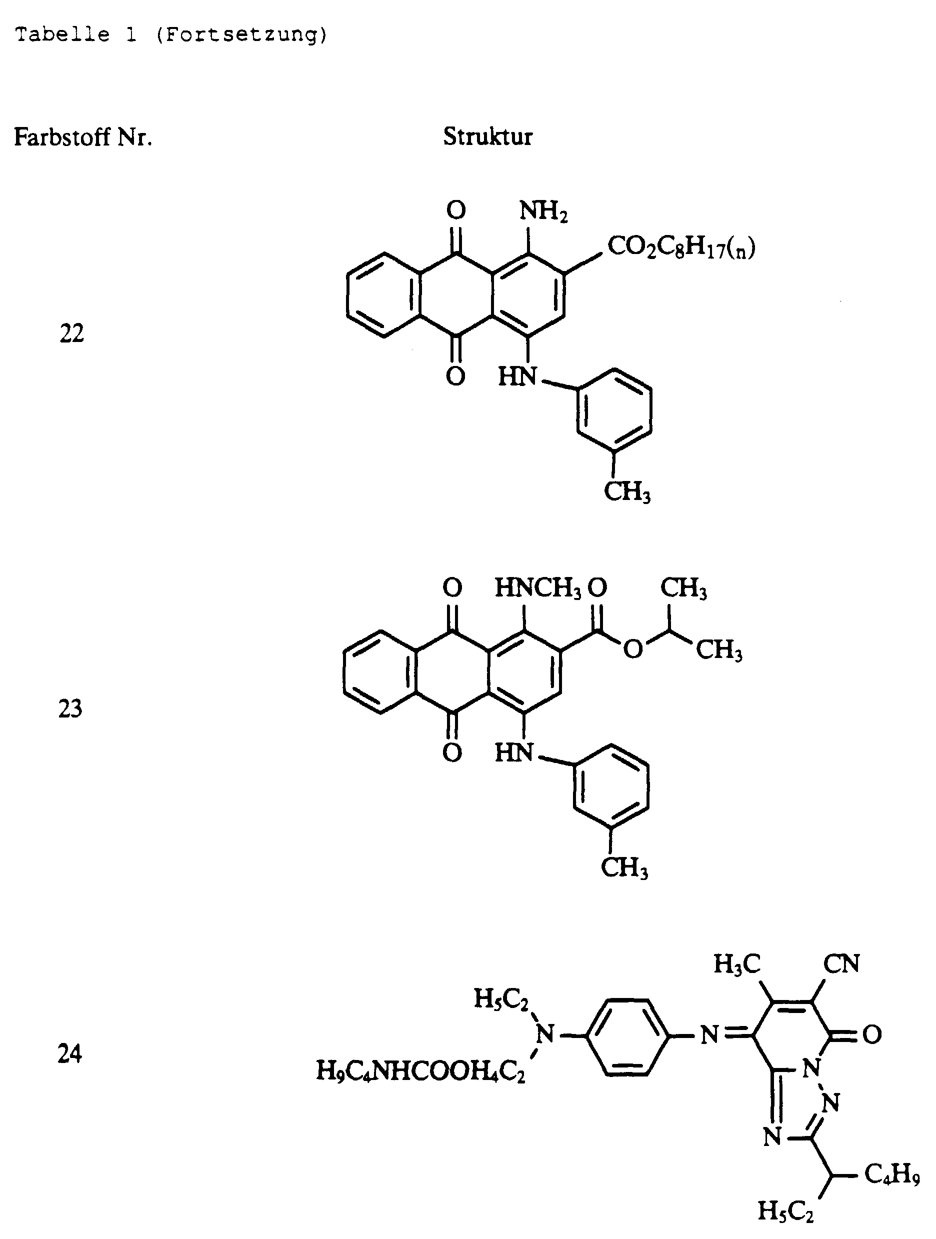

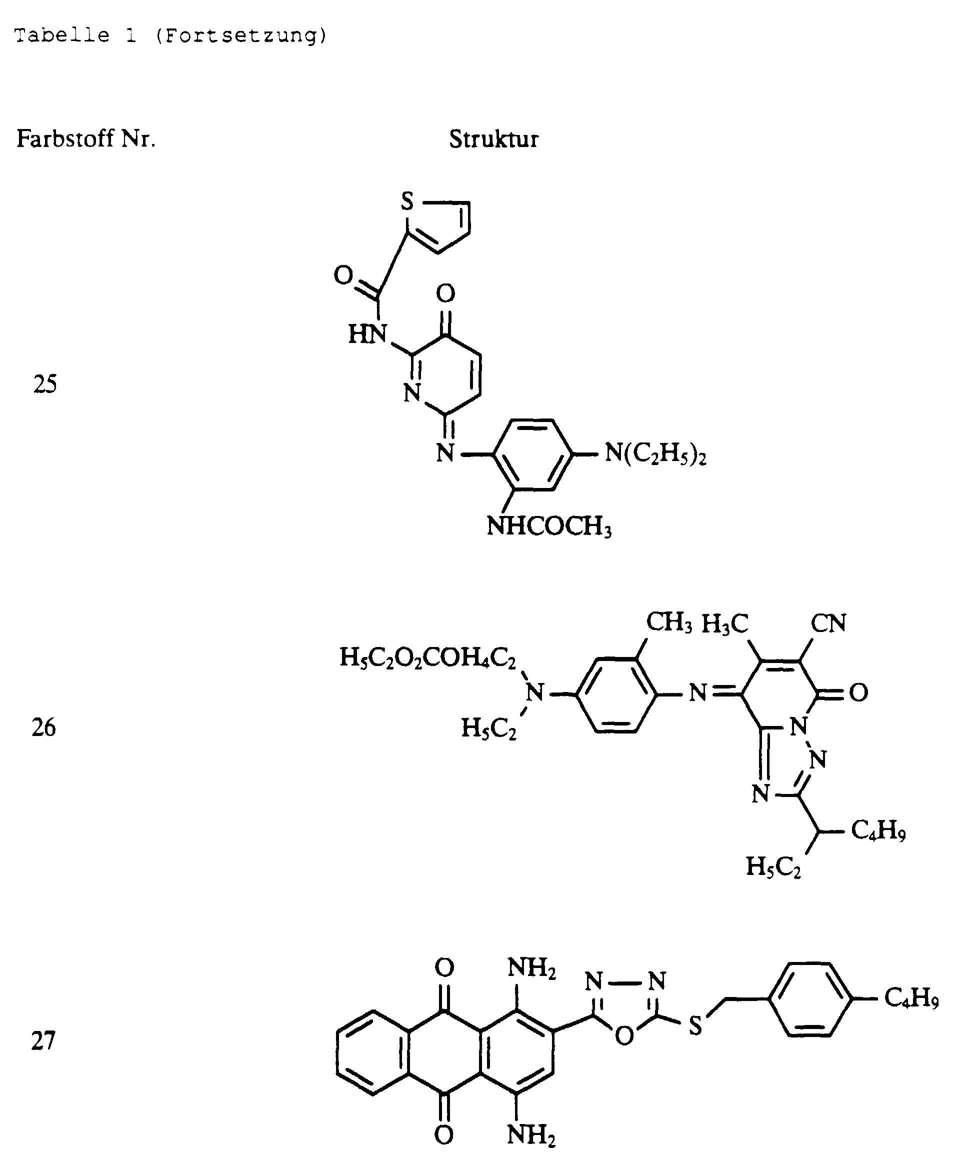

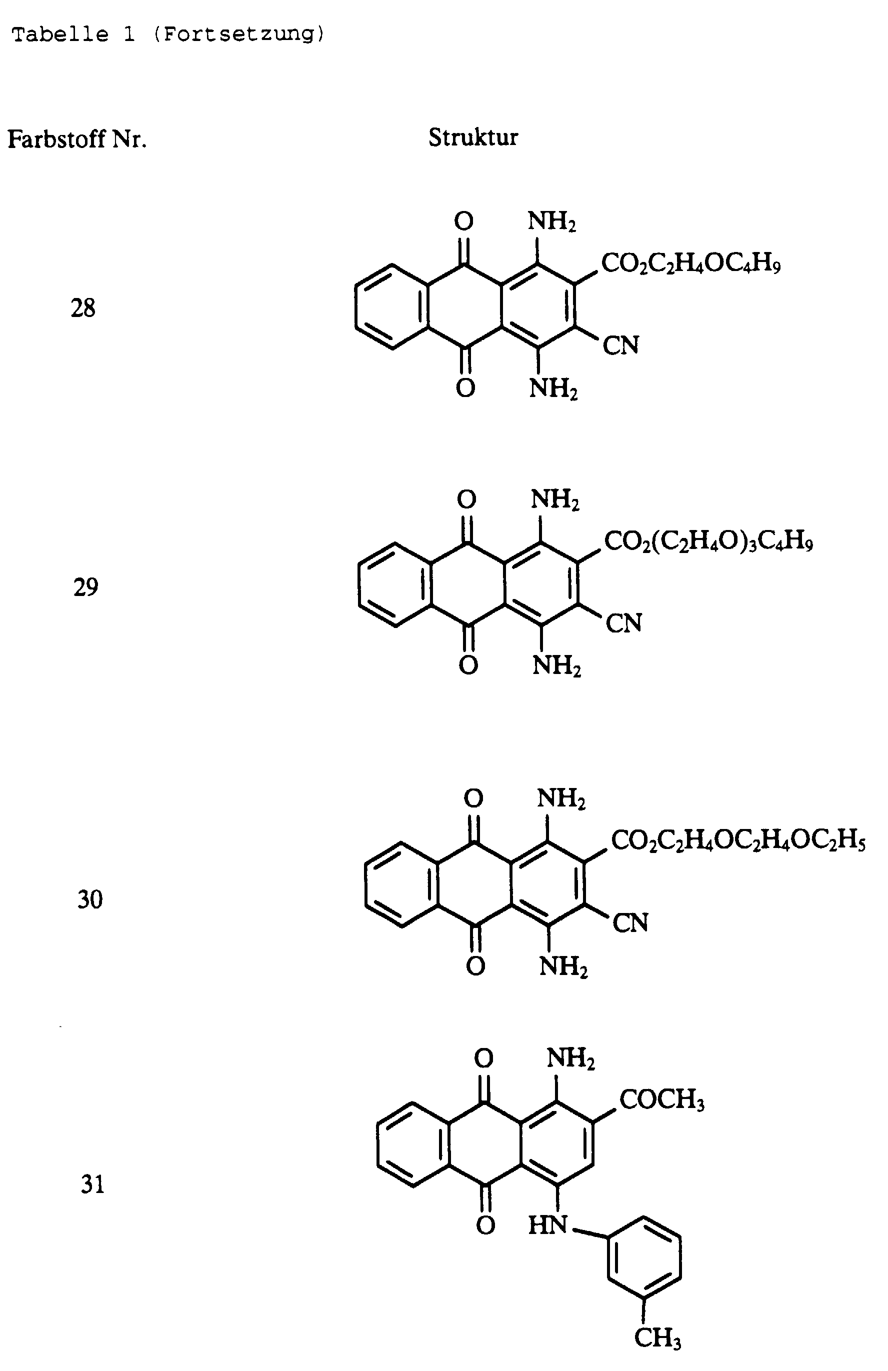

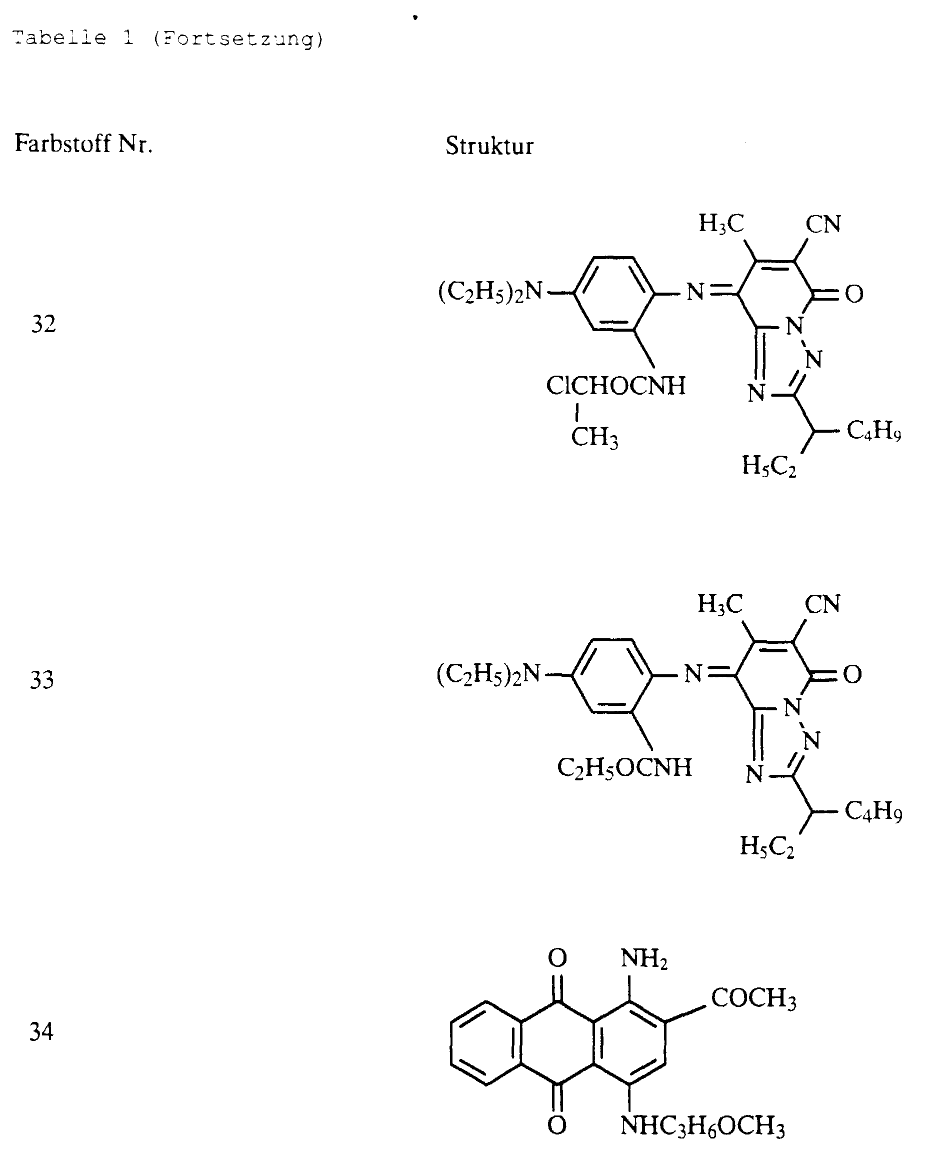

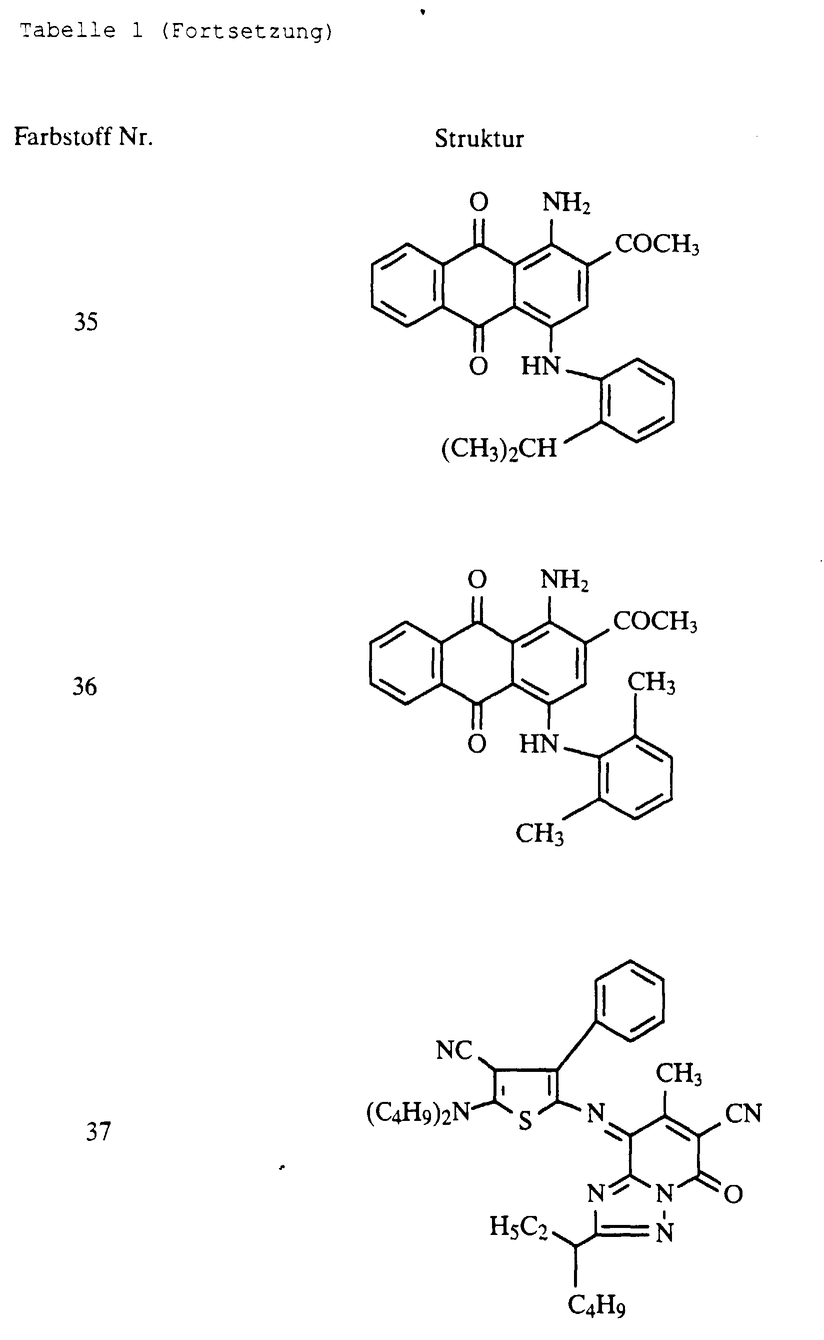

In der folgenden Tabelle 2 sind die Lichtechtheit (LE) der Einzelfarbstoffe 1 bis 31 sowie ihre thermische Stabilität (TS) aufgeführt. Als Wert für die Beurteilung der Lichtechtheit ist (hier und im folgenden) die Anzahl der Bestrahlungsstunden angegeben, nach der 20 % der ursprünglich vorhandenen Farbstoffmenge zerstört war.

Die thermische Stabilität wird durch Lagern der Drucke im Trockenschrank (1 Woche bei 70°C) bestimmt. Sie wird durch Noten beurteilt, die von 1 bis 6 reichen. Die Note 1 steht für sehr gut, die Note 6 für ungenügend.

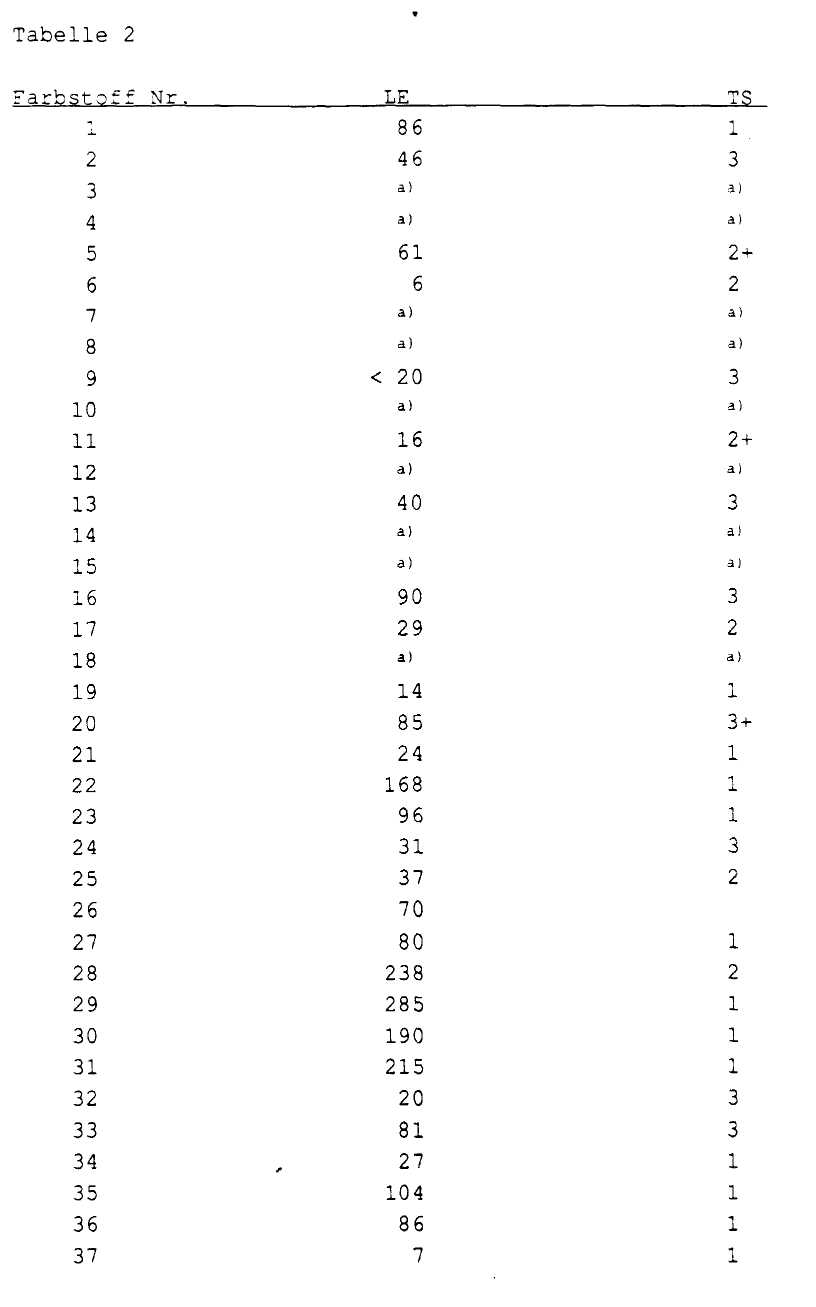

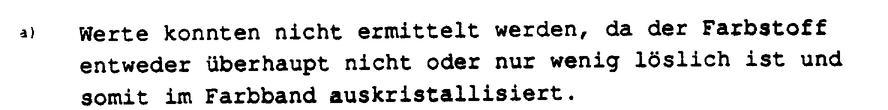

Allgemeine Vorschrift:
a) 10 g Farbstoffmischung werden, gegebenenfalls unter kurzzeitigem Erwärmen auf 80 bis 90°C, in 100 g einer 10 gew.%igen Lösung eines Bindemittels (Vylon® 290 der Firma Toyobo) in ein Methylethylketon/Toluol/Cyclohexanon-Gemisch (4,5:2:2 v/v/v) eingerührt.
   Die Drucktinte wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf Hitachi VY-S Videoprinterpapier verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind in der folgenden Tabelle 3 aufgeführt, wobei zusätzlich noch das Mischungsverhältnis (MV - Gewichtsverhältnis), die Lichtechtheit sowie die thermische Stabilität angegeben sind.

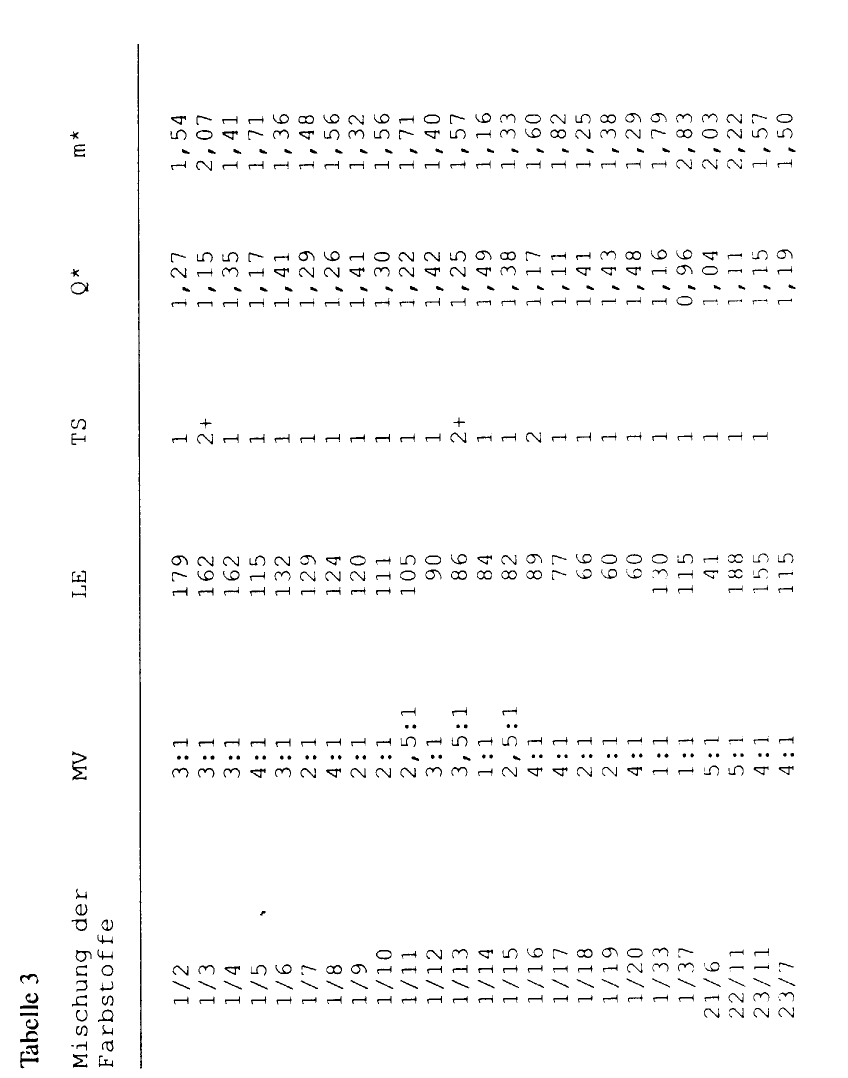

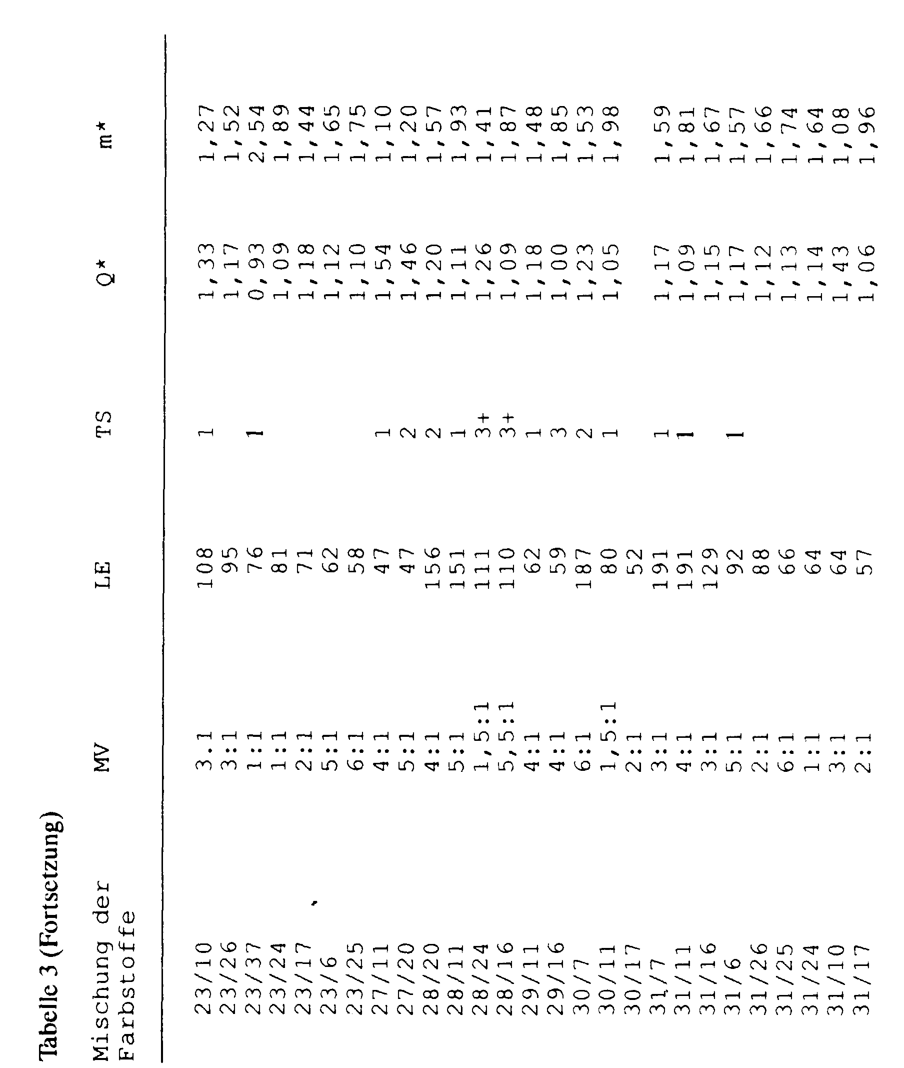

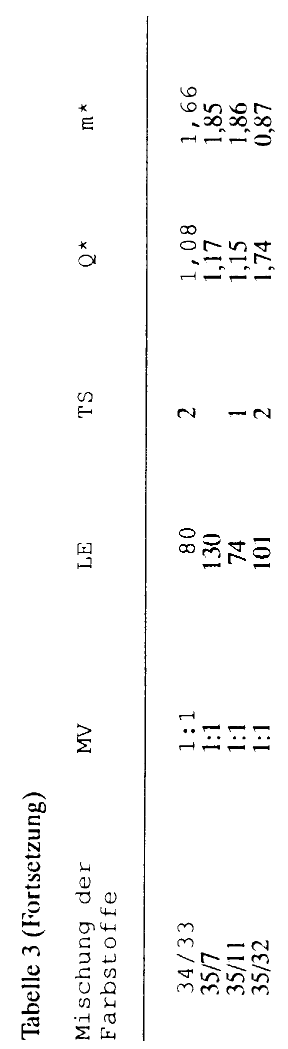

Unter der Annahme, daß die Farbstoffe exponentiell mit der Zeit und unabhängig voneinander unter Lichteinwirkung zerfallen, wurden für die Mischungen 1/2, 1/6 und 1/13 folgende LE-Werte rechnerisch bestimmt: 58, 12,5 und 55.

## Patentansprüche

1. Farbstoffmischungen, enthaltend mindestens einen Anthrachinonfarbstoff, dessen Absorptionsmaximum bei einer Wellenlänge von 600 bis 750 nm liegt, sowie mindestens einen Farbstoff der Formel I, II, III, IV und/oder V 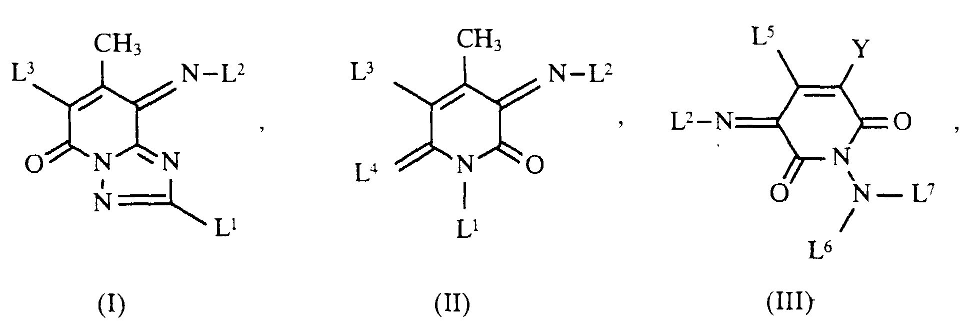 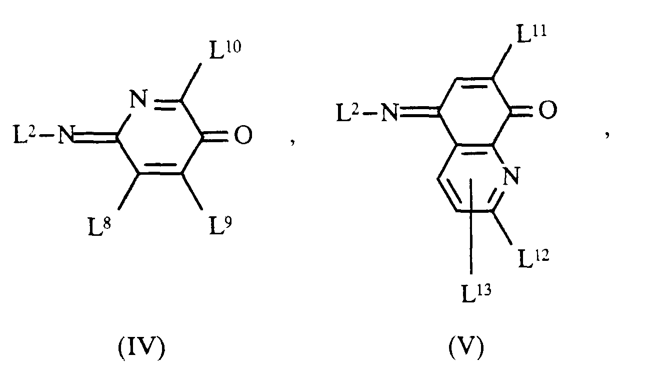 worin
L¹ C₁-C₂₀-Alkyl, das gegebenenfalls substituiert ist und durch 1 bis 4 Sauerstoffatome in Etherfunktion unterbrochen sein kann, gegebenenfalls substituiertes Phenyl oder Hydroxy,
L² einen 5- oder 6-gliedrigen carbocyclischen oder heterocyclischen Rest,
L³ Cyano, Carbamoyl, Carboxyl oder C₁-C₄-Alkoxycarbonyl,
L⁴ Sauerstoff oder einen Rest der Formel
C(CN)₂, 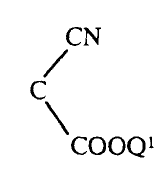 oder C(COOQ¹)₂, worin Q¹ jeweils für C₁-C₈-Alkyl, das gegebenenfalls durch 1 oder 2 Sauerstoffatome in Etherfunktion unterbrochen ist, steht,
L⁵ Wasserstoff oder C₁-C₄-Alkyl,
L⁶ und L⁷ gleich oder verschieden sind und unabhängig voneinander jeweils Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L⁶ und L⁷ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält,
Y Cyano oder einen Rest der Formel CO-Q², CO-OQ² oder CO-NHQ², worin Q² für Wasserstoff, C₁-C₈-Alkyl, das gegebenenfalls substituiert ist und durch 1 oder 2 Sauerstoffatome in Etherfunktion unterbrochen sein kann, C₅-C₇-Cycloalkyl, Phenyl oder Tolyl steht,
L⁸ Wasserstoff, Fluor, Chlor, Methyl oder einen Rest der Formel -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ oder -NH-SO₂-NA¹A², worin
A¹ und A² gleich oder verschieden sind und unabhängig voneinander jeweils für C₁-C₈-Alkyl, das gegebenenfalls substituiert ist und durch 1 oder 2 Sauerstoffatome in Etherfunktion unterbrochen sein kann, C₅-C₇-Cycloalkyl, Phenyl oder Tolyl oder -NA¹A² auch für Amino und
A³ für einen fünf- oder sechsgliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen,
L⁹ Wasserstoff, Fluor oder Chlor oder L⁸ und L⁹ zusammen mit den Kohlenstoffatomen an die sie geknüpft sind, einen fünf- oder sechsgliedrigen aromatischen carbocyclischen oder heterocyclischen Ring,
L¹⁰ den obengenannten Rest A³ oder einen Rest der Formel -CO-OA¹, -CO-NH-A¹, -CO-NH-CO-A¹, -CO-NH-CO-A³, -CO-NH-SO₂-A³, -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ oder -NH-SO₂-NA¹A², worin A¹, A² und A³ jeweils die obengenannte Bedeutung besitzen,
L¹¹ Fluor, Chlor oder Brom,
L¹² Wasserstoff oder C₁-C₄-Alkyl und
L¹³ Wasserstoff, Fluor, Chlor oder Brom bedeuten.

2. Farbstoffmischungen nach Anspruch 1, enthaltend mindestens einen Anthrachinonfarbstoff der Formel VI, VII und/oder VIII 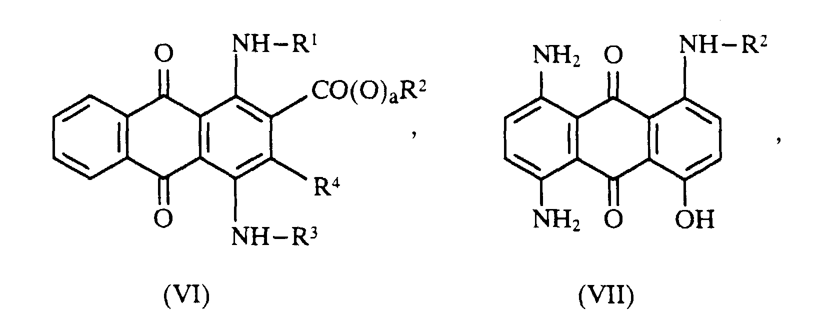 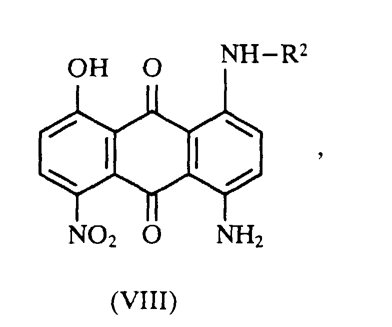 worin
a 0 oder 1,
R¹, R² und R³ gleich oder verschieden sind und unabhängig voneinander jeweils Wasserstoff, Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen und durch Phenyl, C₁-C₄-Alkylphenyl, C₁-C₄-Alkoxyphenyl, Halogenphenyl, Benzyloxy, C₁-C₄-Alkylbenzyloxy, C₁-C₄-Alkoxybenzyloxy, Halogenbenzyloxy, Halogen, Hydroxy oder Cyano substituiert sein können, gegebenenfalls durch C₁-C₁₅-Alkyl, C₁-C₁₅-Alkoxy, Halogen oder Benzyloxy substituiertes Phenyl, gegebenenfalls durch C₁-C₁₅-Alkyl, C₁-C₁₅-Alkoxy, Halogen oder Benzyloxy substituiertes Cyclohexyl oder einen Rest der Formel
[-E-O]ₘ-R⁵,
worin
E für C₂-C₆-Alkylen
m für 1, 2, 3, 4, 5 oder 6 und
R⁵ für C₁-C₄-Alkyl oder gegebenenfalls durch C₁-C₄-Alkyl oder C₁-C₄-Alkoxy substituiertes Phenyl stehen, und
R⁴ Wasserstoff oder Cyano bedeuten,
mit der Maßgabe, daß R² nur dann Wasserstoff bedeutet, wenn a 0 ist.

3. Farbstoffmischungen nach Anspruch 1, enthaltend 10 bis 90 Gew.%, bezogen auf das Gewicht der Farbstoffmischung, einen oder mehrere Anthrachinonfarbstoffe sowie 10 bis 90 Gew.%, bezogen auf das Gewicht der Farbstoffmischung, einen oder mehrere Farbstoffe der Formel I, II, III, IV und/oder V.

4. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich eine Farbstoffmischung gemäß Anspruch 1 befindet.

## Claims

1. Dye mixture comprising at least one anthraquinone dye whose absorption maximum is at a wavelength of from 600 to 750 nm and also at least one dye of the formula I, II, III, IV and/or V 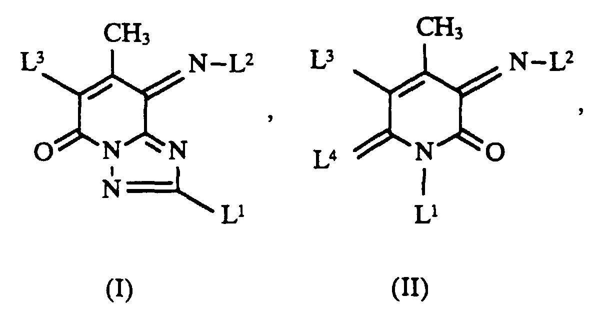 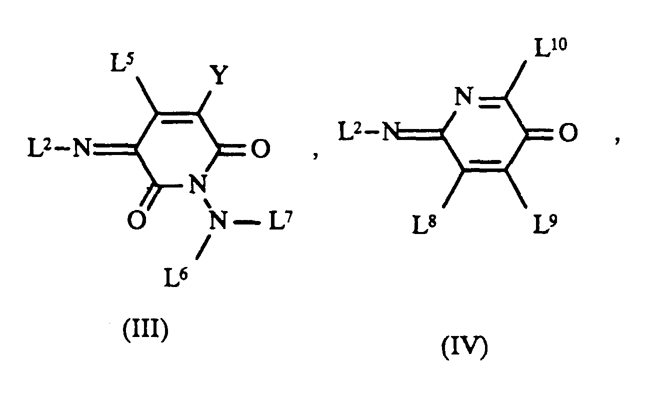 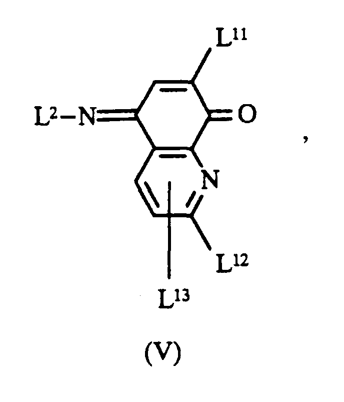 where
L¹ is C₁-C₂₀-alkyl, which may be substituted and may be interrupted by from 1 to 4 oxygen atoms in ether function, substituted or unsubstituted phenyl or hydroxyl,
L² is a 5- or 6-membered carbocyclic or heterocyclic radical,
L³ is cyano, carbamoyl, carboxyl or C₁-C₄-alkoxycarbonyl,
L⁴ is oxygen or a radical of the formula
C(CN)₂, 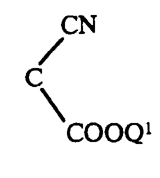 or C(COOQ¹)₂, where Q¹ is in each case C₁-C₈-alkyl, which may be interrupted by 1 or 2 oxygen atoms in ether function,
L⁵ is hydrogen or C₁-C₄-alkyl,
L⁶ and L⁷ are identical or different and each is independently of the other hydrogen, substituted or unsubstituted C₁-C₁₂-alkyl, C₅-C₇-cycloalkyl, substituted or unsubstituted phenyl, substituted or unsubstituted pyridyl, substituted or unsubstituted C₁-C₁₂-alkanoyl, C₁-C₁₂-alkoxycarbonyl, substituted or unsubstituted C₁-C₁₂-alkylsulfonyl, C₅-C₇-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl, or together with the nitrogen atom joining them together are unsubstituted or C₁-C₄-alkyl-substituted succinimido, unsubstituted or C₁-C₄-alkyl-substituted phthalimido or a five- or six-membered saturated heterocyclic radical, which may contain further hetero atoms,
Y is cyano or a radical of the formula CO-Q², CO-OQ² or CO-NHQ², where Q² is hydrogen, C₁-C₈-alkyl, which may be substituted and may be interrupted by 1 or 2 oxygen atoms in ether function, C₅-C₇-cycloalkyl, phenyl or tolyl,
L⁸ is hydrogen, fluorine, chlorine, methyl or a radical of the formula -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ or -NH-SO₂-NA¹A², where
A¹ and A² are identical or different and each is independently of the other C₁-C₈-alkyl, which may be substituted and may be interrupted by 1 or 2 oxygen atoms in ether function, C₅-C₇-cycloalkyl, phenyl or tolyl, or else -NA¹A² is amino, and
A³ is a five- or six-membered aromatic heterocyclic radical, which may be benzofused and contain one or more hetero atoms selected from the group consisting of nitrogen, oxygen and sulfur,
L⁹ is hydrogen, fluorine or chlorine, or L⁸ and L⁹ together with the carbon atoms to which they are attached are a five- or six-membered aromatic carbocyclic or heterocyclic ring,
L¹⁰ is the abovementioned radical A³ or a radical of the formula -CO-OA¹, -CO-NH-A¹, -CO-NH-CO-A¹, -CO-NH-CO-A³, -CO-NH-SO₂-A³, -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ or -NH-SO₂-NA¹A², where A¹, A² and A³ are each as defined above,
L¹¹ is fluorine, chlorine or bromine,
L¹² is hydrogen or C₁-C₄-alkyl, and
L¹³ is hydrogen, fluorine, chlorine or bromine.

2. Dye mixtures as claimed in claim 1 comprising at least one anthraquinone dye of the formula VI, VII and/or VIII 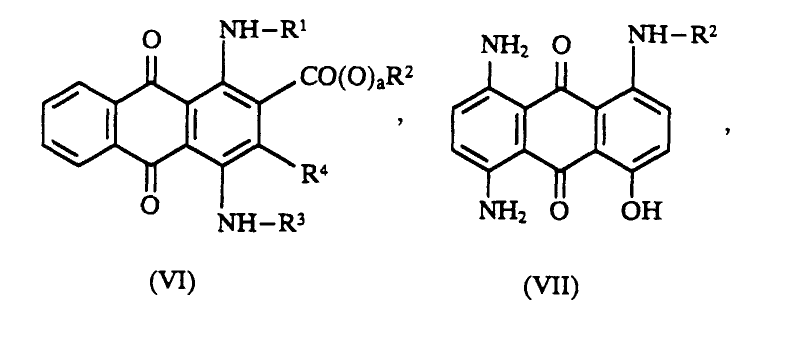 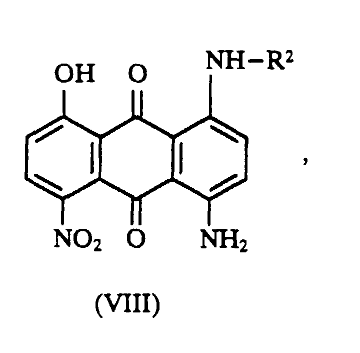 where
a is 0 or 1,
R¹, R² and R³ are identical or different and each is independently of the others hydrogen, alkyl, alkoxyalkyl, alkanoyloxyalkyl, alkoxycarbonyloxyalkyl or alkoxycarbonylalkyl, each of which may have up to 20 carbon atoms and be phenyl-, C₁-C₄-alkylphenyl-, C₁-C₄-alkoxyphenyl-, halophenyl-, benzyloxy-, C₁-C₄-alkylbenzyloxy-, C₁-C₄-alkoxybenzyloxy-, halobenzyloxy-, halogen-, hydroxyl- or cyano-substituted, unsubstituted or C₁-C₁₅-alkyl-, C₁-C₁₅-alkoxy-, halogen- or benzyloxy-substituted phenyl, unsubstituted or C₁-C₁₅-alkyl-, C₁-C₁₅-alkoxy-, halogen- or benzyloxy-substituted cyclohexyl or a radical of the formula
[-E-O]ₘ-R⁵,
where
E is C₂-C₆-alkylene,
m is 1, 2, 3, 4, 5 or 6, and
R⁵ is C₁-C₄-alkyl or unsubstituted or C₁-C₄-alkyl- or C₁-C₄-alkoxy-substituted phenyl, and
R⁴ is hydrogen or cyano,
with the proviso that R² is hydrogen only when a is 0.

3. Dye mixtures as claimed in claim 1 comprising from 10 to 90% by weight, based on the weight of the dye mixture, of one or more anthraquinone dyes and also from 10 to 90% by weight, based on the weight of the dye mixture, of one or more dyes of the formula I, II, III, IV and/or V.

4. A process for transferring dyes from a transfer to plastic-coated paper by diffusion or sublimation by means of an energy source, which comprises using a transfer on which there is a dye mixture as claimed in claim 1.

## Revendications

1. Mélanges de colorants, contenant au moins un colorant anthraquinonique dont le maximum d'absorption se situe à une longueur d'onde de 600 à 750 nm, ainsi qu'au moins un colorant de formules I, II, III, IV et/ou V 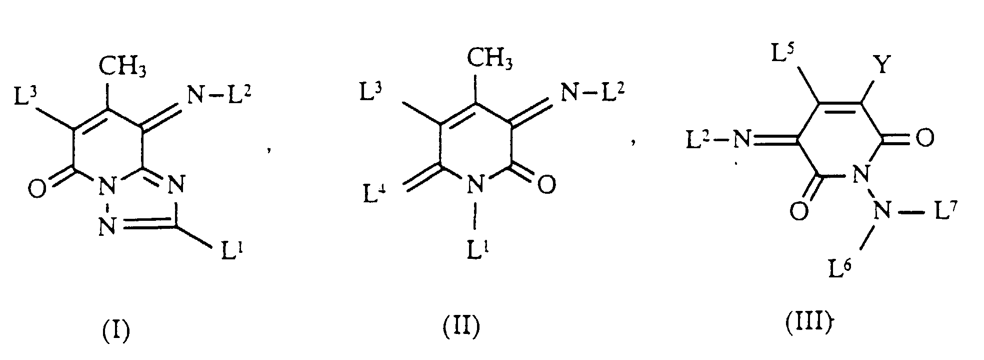 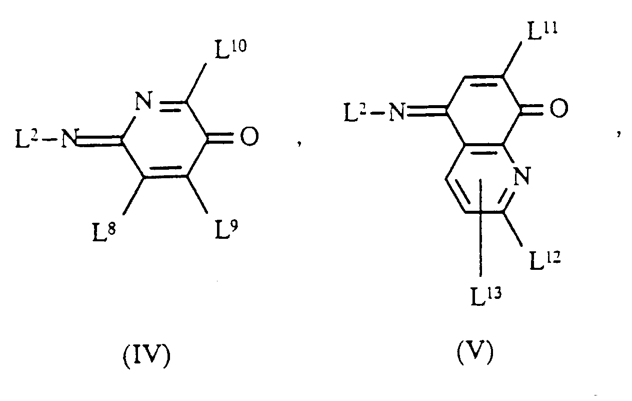 dans lesquelles
L¹ représente un reste alkyle en C₁-C₂₀ qui est éventuellement substitué et peut être interrompu par 1 à 4 atomes d'oxygène en fonction éther, un reste phényle éventuellement substitué ou un reste hydroxy,
L² représente un reste carbocyclique ou hétérocyclique à 5 ou 6 chaînons,
L³ représente un groupement cyano, carbamoyle, carboxyle ou (alcoxy en C₁-C₄)carbonyle,
L⁴ représente un atome d'oxygène ou un reste de formule
C(CN)₂, 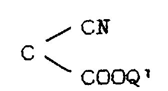 ou C(COOQ¹)₂, où Q¹ est mis chaque fois pour un reste alkyle en C₁-C₈ qui est éventuellement interrompu par 1 ou 2 atomes d'oxygène en fonction éther,
L⁵ représente un atome d'hydrogène ou un reste alkyle en C₁-C₄,
L⁶ et L⁷ sont identiques ou différents et représentent chacun, indépendamment l'un de l'autre, un atome d'hydrogène, un reste alkyle en C₁-C₁₂ éventuellement substitué, cycloalkyle en C₅-C₇, phényle éventuellement substitué, pyridyle éventuellement substitué, alcanoyle en C₁-C₁₂ éventuellement substitué, (alcoxy en C₁-C₁₂)carbonyle, alkylsulfonyle en C₁-C₁₂ éventuellement substitué, cycloalkylsulfonyle en C₅-C₇, phénylsulfonyle éventuellement substitué, pyridylsulfonyle éventuellement substitué, benzoyle éventuellement substitué, pyridylcarbonyle ou thiénylcarbonyle, ou L⁶ et L⁷ représentent ensemble, avec l'atome d'azote qui les relie, un reste succinimido éventuellement substitué par un groupement alkyle en C₁-C₄, un reste phtalimido éventuellement substitué par un groupement alkyle en C₁-C₄ ou un reste hétérocyclique saturé à 5 ou 6 chaînons qui contient éventuellement d'autres hétéroatomes,
Y représente un reste cyano ou un reste de formule CO-Q², CO-OQ² ou CO-NHQ², où Q² est mis pour un atome d'hydrogène ou pour un reste alkyle en C₁-C₈ qui est éventuellement substitué et peut être interrompu par 1 ou 2 atomes d'oxygène en fonction éther, cycloalkyle en C₅-C₇, phényle ou tolyle,
L⁸ représente un atome d'hydrogène, de fluor, de chlore, un reste méthyle ou un reste de formule -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ ou -NH-SO₂-NA¹A^{2,} où
A¹ et A² sont identiques ou différents et sont mis chacun, indépendamment l'un de l'autre, pour un reste alkyle en C₁-C₈ qui est éventuellement substitué et peut être interrompu par 1 ou 2 atomes d'oxygène en fonction éther, cycloalkyle en C₅-C₇, phényle ou tolyle, -NA¹A² pouvant aussi être mis pour un groupement amino, et
A³ est mis pour un reste hétérocyclique aromatique à 5 ou 6 chaînons qui est éventuellement benzocondensé et comporte un ou plusieurs hétéroatomes choisis dans le groupe constitué par l'azote, l'oxygène et le soufre,
L⁹ représente un atome d'hydrogène, de fluor ou de chlore, ou L⁸ et L⁹ représentent ensemble, avec les atomes de carbone auxquels ils sont liés, un noyau carbocyclique ou hétérocyclique aromatique à 5 ou 6 chaînons,
L¹⁰ correspond au reste A³ susmentionné ou représente un reste de formule -CO-OA¹, -CO-NH-A¹, -CO-NH-CO-A¹, -CO-NH-CO-A³, -CO-NH-SO₂-A³, -NH-CO-A¹, -NH-CO-OA¹, -NH-CO-NA¹A², -NH-CS-OA¹, -NH-CS-NA¹A², -NH-CO-A³, -NH-SO₂-A¹, -NH-SO₂-A³ ou -NH-SO₂-NA¹A², où A¹, A² et A³ ont chacun la signification donnée ci-dessus,
L¹¹ représente un atome de fluor, de chlore ou de brome,
L¹² représente un atome d'hydrogène ou un reste alkyle en C₁-C₄, et
L¹³ représente un atome d'hydrogène, de fluor, de chlore ou de brome.

2. Mélanges de colorants selon la revendication 1, contenant au moins un colorant anthraquinonique de formules VI, VII et/ou VIII 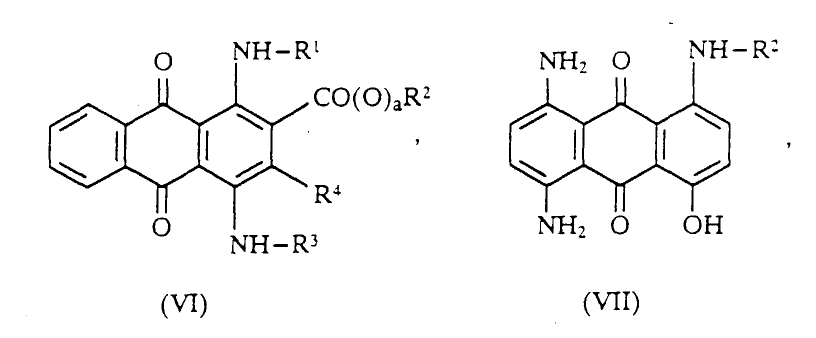 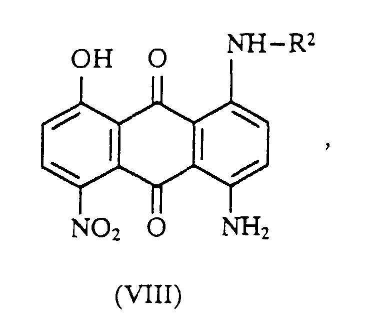 dans lesquelles
a est mis pour 0 ou 1,
R¹, R² et R³ sont identiques ou différents et représentent chacun, indépendamment les uns des autres, un atome d'hydrogène ou un reste alkyle, alcoxyalkyle, alcanoyloxyalkyle, alcoxycarbonyloxyalkyle ou alcoxycarbonylalkyle, ces restes renfermant chacun jusqu'à 20 atomes de carbone et pouvant être éventuellement substitués par des groupements phényle, alkylphényle en C₁-C₄, alcoxyphényle en C₁-C₄, halogénophényle, benzyloxy, alkylbenzyloxy en C₁-C₄, alcoxybenzyloxy en C₁-C₄, halogénobenzyloxy, par des atomes d'halogène ou par des groupements hydroxy ou cyano, un reste phényle éventuellement substitué par un groupement alkyle en C₁-C₁₅, alcoxy en C₁-C₁₅, par un atome d'halogène ou par un groupement benzyloxy, un reste cyclohexyle éventuellement substitué par un groupement alkyle en C₁-C₁₅, alcoxy en C₁-C₁₅, par un atome d'halogène ou par un groupement benzyloxy, ou un reste de formule
[-E-O]ₘ-R⁵,
où
E est mis pour un reste alkylène en C₂-C₆,
m est mis pour 1, 2, 3, 4, 5 ou 6 et
R⁵ est mis pour un reste alkyle en C₁-C₄ ou phényle éventuellement substitué par un groupement alkyle en C₁-C₄ ou alcoxy en C₁-C₄, et
R⁴ représente un atome d'hydrogène ou un groupement cyano,
étant spécifié que R² ne représente un atome d'hydrogène que quand a est mis pour 0.

3. Mélanges de colorants selon la revendication 1, contenant 10 à 90% en poids, par rapport au poids du mélange de colorants, d'un ou de plusieurs colorants anthraquinoniques, ainsi que 10 à 90% en poids, par rapport au poids du mélange de colorants, d'un ou de plusieurs colorants de formules I, II, III, IV et/ou V.

4. Procédé de transfert de colorants entre un support et un papier revêtu de matière plastique, par diffusion ou sublimation à l'aide d'une source d'énergie, caractérisé en ce que l'on utilise un support sur lequel se trouve un mélange de colorants selon la revendication 1.
